(19) Europäisches Patentamt
European Patent Office
Office européen des brevets

(11) **EP 2 737 230 B1**

(12) **EUROPÄISCHE PATENTSCHRIFT**

(45) Veröffentlichungstag und Bekanntmachung des Hinweises auf die Patenterteilung:
16.03.2016 Patentblatt 2016/11

(21) Anmeldenummer: **12728241.6**

(22) Anmeldetag: **14.06.2012**

(51) Int Cl.:
*F16H 3/72* *(2006.01)*        *F16H 37/04* *(2006.01)*
*B60K 6/48* *(2007.10)*        *B60K 6/547* *(2007.10)*
*F16H 3/095* *(2006.01)*        *F16H 3/097* *(2006.01)*

(86) Internationale Anmeldenummer:
**PCT/EP2012/061336**

(87) Internationale Veröffentlichungsnummer:
**WO 2013/017326 (07.02.2013 Gazette 2013/06)**

(54) **AUTOMATISIERTES GRUPPENGETRIEBE EINES KRAFTFAHRZEUGS UND VERFAHREN ZUM BETREIBEN DESSELBEN**

AUTOMATED RANGE-CHANGE TRANSMISSION IN A MOTOR VEHICLE AND METHOD FOR OPERATION OF SAME

BOÎTE DE VITESSES AUTOMATISÉE À DEUX GAMMES POUR VÉHICULE AUTOMOBILE ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2011 DE 102011080069**

(43) Veröffentlichungstag der Anmeldung:
**04.06.2014 Patentblatt 2014/23**

(73) Patentinhaber: **ZF Friedrichshafen AG 88038 Friedrichshafen (DE)**

(72) Erfinder: **KALTENBACH, Johannes 88048 Friedrichshafen (DE)**

(56) Entgegenhaltungen:
**WO-A1-2011/072986        DE-A1-102008 000 953
DE-A1-102008 002 380        DE-A1-102009 012 223
US-A1- 2010 216 584**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 737 230 B1

**Beschreibung**

Die Erfindung betrifft ein automatisiertes Gruppengetriebe eines Kraftfahrzeugs nach dem Oberbegriff des Anspruchs 1. Des Weiteren betrifft die Erfindung Verfahren zum Betreiben desselben. Ein Getriebe nach dem Oberbegriff des Anspruchs 1 ist aus DE 10 2008 000 953 bekannt.

Als automatisierte Gruppengetriebe ausgebildete Schaltgetriebe mit einem mehrstufigen Hauptgetriebe und einer dem Hauptgetriebe antriebstechnisch nachgeschalteten, insbesondere als Bereichsgruppe ausgeführten, Nachschaltgruppe und/oder einer dem Hauptgetriebe antriebstechnisch vorgeschalteten, insbesondere als Splitgruppe ausgeführten, Vorschaltgruppe sind aus der DE 10 2007 010 829 A1 bekannt und kommen z. B. in Nutzfahrzeugen zur Anwendung. Durch eine beispielsweise zweistufig ausgeführte Splitgruppe mit einem in etwa der Hälfte eines mittleren Übersetzungssprungs zwischen zwei aufeinander folgenden Übersetzungsstufen des Hauptgetriebes entsprechenden Übersetzungssprung werden die Übersetzungssprünge des Hauptgetriebes halbiert und die Anzahl der insgesamt zur Verfügung stehenden Gänge verdoppelt. Durch eine beispielsweise zweistufige Bereichsgruppe mit einem in etwa um einen mittleren Übersetzungssprung zwischen zwei aufeinander folgenden Übersetzungsstufen des Hauptgetriebes über dem gesamten Übersetzungssprung des Hauptgetriebes liegenden Übersetzungssprung wird die Spreizung des Gruppengetriebes in etwa verdoppelt und die Anzahl der insgesamt zur Verfügung stehenden Gänge nochmals verdoppelt. Die Splitgruppe kann dem Hauptgetriebe vor- oder nachgeschaltet und demnach als Vorschaltgruppe oder Nachschaltgruppe ausgeführt sein. Ebenso kann die Bereichsgruppe dem Hauptgetriebe vor- oder nachgeschaltet und demnach als Vorschaltgruppe oder Nachschaltgruppe ausgeführt sein. Automatisierte Schaltgetriebe, die formschlüssig arbeitende Schaltelemente aufweisen, sind von automatischen Lastschaltgetrieben mit reibschlüssig arbeitenden Schaltelementen zu unterscheiden. Die hier vorliegende Erfindung betrifft ein automatisiertes Gruppengetriebe welches zumindest ein Hauptgetriebe und eine vorzugsweise als Splitgruppe ausgeführte Vorschaltgruppe umfasst. Optional kann eine Nachschaltgruppe vorhanden sein.

Bei den aus dem Stand der Technik bekannten, automatisierten Gruppengetrieben ist das Hauptgetriebe in Vorgelegebauweise ausgeführt und umfasst eine Hauptwelle sowie mindestens eine Vorgelegewelle. Die Vorschaltgruppe und die gegebenenfalls vorhandene Nachschaltgruppe können ebenfalls in Vorgelegebauweise ausgeführt sein. Dann, wenn ein automatisiertes Gruppengetriebe in einen Antriebsstrang eines Kraftfahrzeugs integriert ist, ist eine Eingangswelle des automatisierten Gruppengetriebes, nämlich der Vorschaltgruppe, vorzugsweise über eine steuerbare Anfahrkupplung mit dem Antriebsaggregat und eine Ausgangswelle des automatisierten Gruppengetriebes mit einem Achsantrieb verbunden.

Dann, wenn das Antriebsaggregat als reiner Verbrennungsmotor ausgeführt ist, ist der Verbrennungsmotor, wie bereits erwähnt, vorzugsweise über die Anfahrkupplung mit der Eingangswelle des Gruppengetriebes gekoppelt.

Dann, wenn das Antriebsaggregat als Hybridantrieb mit einem Verbrennungsmotor und einer elektrischen Maschine ausgeführt ist, ist die elektrische Maschine entweder unter Bereitstellung eines sogenannten Kurbelwellenstartergenerators (KSG-Anordung) zwischen den Verbrennungsmotor und die Anfahrkupplung oder unter Bereitstellung eines sogenannten integrierten Startergenerators (ISG-Anordung) zwischen die Anfahrkupplung und die Eingangswelle des Gruppengetriebes geschaltet.

Aus DE 199 34 696 A1, DE 10 2008 043 341 A1 und EP 0 986 713 B1 sind jeweils elektrodynamische Antriebssysteme mit einer elektrischen Maschine und mit einem Planetengetriebe bekannt, wobei nach der EP 0 986 713 B1 sowie nach der DE 10 2008 043 341 A1 das jeweilige elektrodynamische Antriebssystem jeweils das gesamte Getriebe umgreift bzw. umfasst.

Hiervon ausgehend liegt der vorliegenden Erfindung das Problem zu Grunde, ein neuartiges automatisiertes Gruppengetriebe eines Kraftfahrzeugs und Verfahren zum Betreiben desselben zu schaffen.

Dieses Problem wird durch ein automatisiertes Gruppengetriebe gemäß Anspruch 1 gelöst.

Erfindungsgemäß ist eine elektrische Maschine des als Hybridantrieb ausgebildeten Antriebsaggregats an die Vorschaltgruppe über ein Planetengetriebe koppelbar, wobei die elektrische Maschine an ein erstes Element des Planetengetriebes koppelbar ist, wobei ein zweites Element des Planetengetriebes mit einer Eingangswelle der Vorschaltgruppe und damit der Eingangswelle des Gruppengetriebes gekoppelt ist, und wobei ein drittes Element des Planetengetriebes mit einer Ausgangswelle der Vorschaltgruppe und damit einer Eingangswelle des Hauptgetriebes gekoppelt ist. Erfindungsgemäß umgreift demnach das elektrodynamische Antriebssystem nicht das gesamte Gruppengetriebe sondern ausschließlich die Vorschaltgruppe.

Bedingt dadurch, dass das elektrodynamische Antriebssystem nicht das gesamte Getriebe, sondern ausschließlich die Vorschaltgruppe des Gruppengetriebes umgreift, sind eine Vielzahl von Vorteilen realisierbar. So kann beim elektrodynamischen Fahren bzw. elektrodynamischen Anfahren die Übersetzung des Hauptgetriebes und einer gegebenenfalls vorhandenen Nachschaltgruppe genutzt werden. Ferner kann beim rein elektrischen Fahren die Übersetzung des Hauptgetriebes sowie einer gegebenenfalls vorhandenen Nachschaltgruppe genutzt werden. Ein weiterer Vorteil liegt darin, dass beim erfindungsgemäßen Gruppengetriebe der Drehzahlbereich der elektrischen Maschine nahe beim Drehzahlbereich des Verbrennungsmotors liegt, da die Vorschaltgruppe über eine geringere Spreizung verfügt als das gesamte Gruppengetriebe. Ein weiterer Vorteil des erfindungsgemäßen Gruppengetriebes besteht darin, dass ein elektrodynamisches Anfahren bzw. elektrodynamisches Fahren auch im Rückwärtsgang möglich ist. Bei dem erfindungsgemäßen Gruppengetriebe kann das Hauptgetriebe mithilfe der elektrischen Maschine synchronisiert werden. Daher kann eine konventionelle Synchronisiereinrichtung oder eine Getriebebremse entfallen. Ferner ist beim erfindungsgemäßen Gruppengetriebe ein Start des Verbrennungsmotors in Neutral sowie ein Laden eines elektrischen Energiespeichers in Neutral unabhängig von einer Fahrgeschwindigkeit möglich.

Vorzugsweise ist das dritte Element des Planetengetriebes unter Umgehung eines Schaltpakets der Vorschaltgruppe über ein koaxial auf der Eingangswelle der Vorschaltgruppe gelagertes Losrad und über die oder jede Vorgelegewelle mit dem Hauptgetriebe gekoppelt. Insbesondere ist zwischen das dritte Element des Planetengetriebes und die oder jede Vorgelegewelle eine Übersetzungsstufe geschaltet, deren Übersetzung zwischen einer Übersetzung einer schaltbaren Low Übersetzungsstufe der Vorschaltgruppe und einer Übersetzung einer schaltbaren High Übersetzungsstufe der Vorschaltgruppe liegt. Eine derartige Ausgestaltung ist konstruktiv besonders vorteilhaft. Dann, wenn die zusätzliche Übersetzungsstufe vorhanden ist, deren Übersetzung zwischen der Übersetzung der schaltbaren Low Übersetzungsstufe und der schaltbaren High Übersetzungsstufe der Vorschaltgruppe liegt, kann die Differenzdrehzahl am Planetengetriebe bei geschalteter Vorschaltgruppe gering gehalten werden. Dadurch kann eine Blindleistung am Planetengetriebe, über welches die elektrische Maschine an der Vorschaltgruppe angreift, gering gehalten werden.

Nach einer vorteilhaften Weiterbildung der Erfindung ist ein Schaltpaket vorgesehen, über welches die Kopplung des zweiten Elements des Planetengetriebes mit der Eingangswelle des Gruppengetriebes oder die Kopplung des dritten Elements des Planetengetriebes mit der Ausgangswelle der Vorschaltgruppe oder die Kopplung des ersten Elements des Planetengetriebes mit der elektrischen Maschine schaltbar ist. Über ein solches Schaltpaket sind weitere vorteilhafte Betriebsarten an einem Kraftfahrzeug mit einem erfindungsgemäßen, automatisierten Gruppengetriebe realisierbar.

Vorteilhafte Verfahren zum Betreiben eines Kraftfahrzeugs mit einem automatisierten Gruppengetriebe, bei welchem das elektrodynamische Antriebssystem nicht das gesamte Getriebe sondern ausschließlich die Vorschaltgruppe umfasst, sind in den Patentansprüchen 11 bis 19 definiert. Diese Verfahren erlauben allesamt einen neuartigen und bevorzugten Betrieb eines solchen Kraftfahrzeugs mit einem solchen automatisierten Gruppengetriebe.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

Fig. 1      ein Schema eines Antriebsstrangs mit einem erfindungsgemäßen Gruppengetriebe sowie einem Antriebsaggregat und einem Achsantrieb nach einem ersten Ausführungsbeispiel der Erfindung;

Fig. 2      ein Schema eines Antriebsstrangs mit einem erfindungsgemäßen Gruppengetriebe sowie einem Antriebsaggregat und einem Achsantrieb nach einem zweiten Ausführungsbeispiel der Erfindung;

Fig. 3      ein Schema eines Antriebsstrangs mit einem erfindungsgemäßen Gruppengetriebe sowie einem Antriebsaggregat und einem Achsantrieb nach einem dritten Ausführungsbeispiel der Erfindung;

Fig. 4      ein Schema eines Antriebsstrangs mit einem erfindungsgemäßen Gruppengetriebe sowie einem Antriebsaggregat und einem Achsantrieb nach einem vierten Ausführungsbeispiel der Erfindung;

Fig. 5      ein Schema eines Antriebsstrangs mit einem erfindungsgemäßen Gruppengetriebe sowie einem Antriebsaggregat und einem Achsantrieb nach einem fünften Ausführungsbeispiel der Erfindung;

Fig. 6      ein Schema eines Antriebsstrangs mit einem erfindungsgemäßen Gruppengetriebe sowie einem Antriebsaggregat und einem Achsantrieb nach einem sechsten Ausführungsbeispiel der Erfindung;

Fig. 7      ein Schema eines Antriebsstrangs mit einem erfindungsgemäßen Gruppengetriebe sowie einem Antriebsaggregat und einem Achsantrieb nach einem siebten Ausführungsbeispiel der Erfindung;

Fig. 8      ein Schema eines Antriebsstrangs mit einem erfindungsgemäßen Gruppengetriebe sowie einem Antriebsaggregat und einem Achsantrieb nach einem achten Ausführungsbeispiel der Erfindung;

Fig. 9      ein Schema eines Antriebsstrangs mit einem erfindungsgemäßen Gruppengetriebe sowie einem Antriebsaggregat und einem Achsantrieb nach einem neunten Ausführungsbeispiel der Erfindung; und

Fig. 10      ein Schema eines Antriebsstrangs mit einem erfindungsgemäßen Gruppengetriebe sowie einem Antriebsaggregat und einem Achsantrieb nach einem zehnten Ausführungsbeispiel der Erfindung.

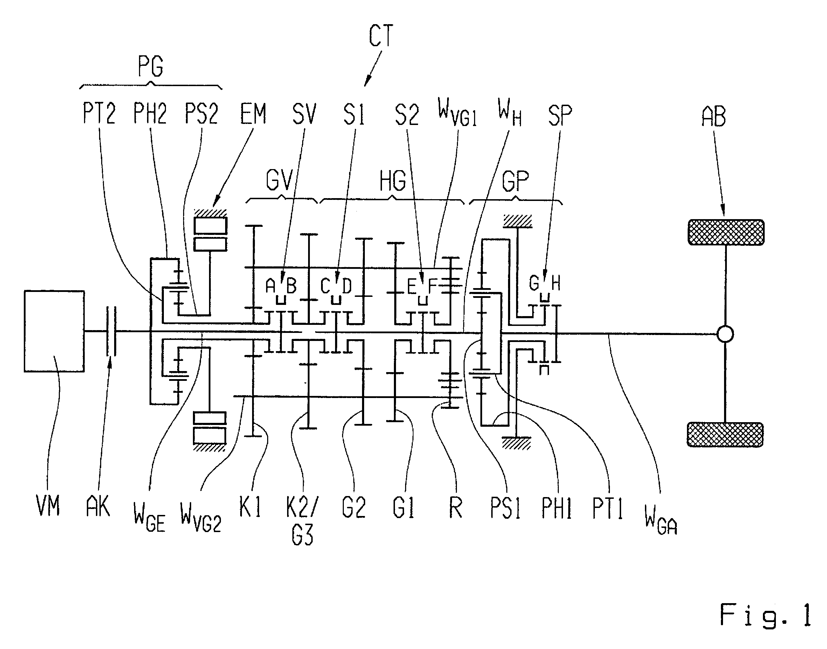

Fig. 1 zeigt ein Schema eines Gruppengetriebes CT zusammen mit einem Verbrennungsmotor VM eines Hybridantriebs, einer elektrischen Maschine EM des Hybridantriebs und einem Achsantrieb AB. Das in Fig. 1 dargestellte Gruppengetriebe CT umfasst ein Hauptgetriebe HG, eine dem Hauptgetriebe HG antriebstechnisch vorgeschaltete, als Splitgruppe GV ausgeführte Vorschaltgruppe sowie eine dem Hauptgetriebe HG antriebstechnisch nachgeschaltete, als Bereichsgruppe GP ausgeführte Nachschaltgruppe. Die Nachschaltgruppe GP ist optional und kann auch entfallen.

Das Hauptgetriebe HG des Gruppengetriebes CT der Fig. 1 ist als Direktganggetriebe in Vorgelegebauweise ausgeführt und weist eine Hauptwelle $W_H$ und zwei Vorgelegewellen $W_{VG1}$ und $W_{VG2}$ auf. Das Hauptgetriebe HG ist mit drei Übersetzungsstufen G1, G2 und G3 für eine Vorwärtsfahrt und einer Übersetzungsstufe R für eine Rückwärtsfahrt dreistufig ausgebildet. Losräder der Übersetzungsstufen G1, G2 und R sind jeweils drehbar auf der Hauptwelle $W_H$ gelagert und über zugeordnete Klauenkupplungen schaltbar. Die zugeordneten Festräder sind drehfest auf den Vorgelegewellen $W_{VG1}$ und $W_{VG2}$ angeordnet.

Die Schaltkupplungen der Übersetzungsstufen G3 und G2 sowie die Schaltkupplungen der Übersetzungsstufen G1 und R sind jeweils als Klauenkupplungen ausgebildet und in einem gemeinsamen Schaltpaket S1 bzw. S2 mit den Schaltelementen C und D im Schaltpaket S1 und den Schaltelementen E und F im Schaltpaket S2 zusammengefasst.

Die als Splitgruppe GV ausgeführte Vorschaltgruppe des Gruppengetriebes CT der Fig. 1 ist zweistufig ausgebildet und ebenfalls in Vorgelegebauweise ausgeführt, wobei die beiden Übersetzungsstufen K1 und K2 der Vorschaltgruppe GV zwei schaltbare Eingangskonstante des Hauptgetriebes HG bilden. Durch eine geringere Übersetzungsdifferenz der beiden Übersetzungsstufen K1, K2 ist die Vorschaltgruppe GV als Splitgruppe ausgelegt.

Das Losrad der ersten Übersetzungsstufe K1 ist drehbar auf der Eingangswelle $W_{GE}$ gelagert, die über eine steuerbare Anfahrkupplung AK mit dem Verbrennungsmotor VM des Hybridantriebs in Verbindung steht. Das Losrad der zweiten Übersetzungsstufe K2 ist drehbar auf der Hauptwelle $W_H$ gelagert, wobei die zweiten Übersetzungsstufe K2 der Vorschaltgruppe GV und die Übersetzungsstufe G3 des Hauptgetriebes HG konstruktiv zusammengefasst sind. Die Festräder beider Übersetzungsstufen K1, K2 der Vorschaltgruppe bzw. Splitgruppe GV sind jeweils drehfest mit den eingangsseitig verlängerten Vorgelegewellen $W_{VG1}$ und $W_{VG2}$ des Hauptgetriebes HG angeordnet. Die synchronisierten und als Klauenkupplungen ausgebildeten Schaltkupplungen der Vorschaltgruppe GV sind in einem gemeinsamen Schaltpaket SV mit den Schaltelementen A und B zusammengefasst.

Die optionale, dem Hauptgetriebe HG nachgeordnete und als Bereichsgruppe GP ausgeführte Nachschaltgruppe des Gruppengetriebes CT der Fig. 1 ist ebenfalls zweistufig ausgebildet, jedoch in Planetenbauweise mit einem einfachen Planetenradsatz. Das Sonnenrad PS1 ist drehfest mit der ausgangsseitig verlängerten Hauptwelle $W_H$ des Hauptgetriebes HG verbunden. Der Planetenträger PT1 ist drehfest mit der Ausgangswelle $W_{GA}$ des Gruppengetriebes CT gekoppelt, die mit einem gestrichelt gezeichneten Achsantrieb AB in Verbindung steht. Das Hohlrad PH1 steht mit einem Schaltpaket SP mit zwei synchronisierten, als Klauenkupplungen ausgebildeten Schaltelementen G und H in Verbindung, durch welche die Bereichsgruppe GP wechselweise durch die Verbindung des Hohlrads PH1 mit einem feststehenden Gehäuseteil in eine Langsamfahrstufe und durch die Verbindung des Hohlrads PH1 mit der Hauptwelle $W_H$ bzw. dem Sonnenrad PS1 in eine Schnellfahrstufe schaltbar ist.

Beim erfindungsgemäßen, automatisierten Gruppengetriebe CT ist eine elektrische Maschine EM des als Hybridantrieb ausgebildeten Antriebsaggregats, welches zusätzlich den Verbrennungsmotor VM umfasst, über ein Planetengetriebe PG an die Vorschaltgruppe GV koppelbar, wobei die elektrische Maschine EM an ein erstes Element des Planetengetriebes PG koppelbar ist, wobei ein zweites Element des Planetengetriebes PG mit einer Eingangswelle der Vorschaltgruppe GV und damit der Eingangswelle $W_{GE}$ des Gruppengetriebes CT koppelbar ist, und wobei ein drittes Element des Planetengetriebes PG mit einer Ausgangswelle der Vorschaltgruppe GV und damit einer Eingangswelle des Hauptgetriebes HG gekoppelt ist.

Die Eingangswelle der Vorschaltgruppe GV entspricht der Eingangswelle $W_{GE}$ des Gruppengetriebes CT. Die Ausgangswelle der Vorschaltgruppe GV entspricht der Eingangswelle des Hauptgetriebes HG, im gezeigten Ausführungsbeispiel den beiden Vorgelegewellen $W_{VG1}$, $W_{VG2}$.

Vorzugsweise ist das dritte Element des Planetengetriebes PG unter Umgehung des Schaltpakets SV der Vorschaltgruppe GV über ein koaxial auf der Eingangswelle der Vorschaltgruppe GV gelagertes Losrad mit der oder jeder Vorgelegewelle $W_{VG1}$, $W_{VG2}$ und damit mit dem Hauptgetriebe HG gekoppelt, nämlich über das in dieses Losrad kämmende, der jeweiligen Vorgelegewelle $W_{VG1}$, $W_{VG2}$ zugeordnete Festrad, wobei dieses Losrad und Festrad in Fig. 1 gemeinsam die Übersetzungsstufe K1 der Vorschaltgruppe GV bilden.

Dann, wenn das Schaltelement A des Schaltpakets SV der Vorschaltgruppe GV geschlossen ist, ist die Low Übersetzungsstufe der Vorschaltgruppe GV geschaltet, wohingegen dann, wenn das Schaltelement B dieses Schaltpakets SV geschaltet ist, die High Übersetzungsstufe der Vorschaltgruppe GV geschaltet ist. An dieser Stelle sei angemerkt, dass bei einer sogenannten Overdrive-Ausführung des Gruppengetriebes CT das Schaltelement B des Schaltpakets SV in die Low Übersetzungsstufe und das Schaltelement A des Schaltpakets SV in die High- Übersetzungsstufe der Vorschaltgruppe GV schaltet.

Im gezeigten, bevorzugten Ausführungsbeispiel der Fig. 1 ist die elektrische Maschine EM an ein Sonnenrad PS2 des Planetengetriebes PG koppelbar, die Eingangswelle der Vorschaltgruppe GV und damit die Eingangswelle $W_{GE}$ des Gruppengetriebes CT ist mit einem Hohlrad PH2 des Planetengetriebes PG gekoppelt. Die Ausgangswelle der Vorschaltgruppe GV und damit die Eingangswelle des Hauptgetriebes HG ist mit einem Steg PT2 des Planetengetriebes PG gekoppelt.

Die obigen drei Elemente des Planetengetriebes PG, nämlich das Sonnenrad PS2, das Hohlrad PH2 und der Steg PT2, können auch auf andere Art und Weise mit diesen Wellen der Vorschaltgruppe GV und der elektrischen Maschine EM gekoppelt sein. So ist möglich, dass diese Elemente des Planetengetriebes PG unter Bereitstellung eines Plus-Planetengetriebes verschaltet sind.

Dann, wenn, wie in Fig. 1 gezeigt, die elektrische Maschine EM an das Sonnenrad PS2 des Planetengetriebes, der Verbrennungsmotor VM am Hohlrad PH2 des Planetengetriebes PG und das Losrad der Übersetzungsstufe K1 der Vorschaltgruppe GV am Steg PT2 des Planetengetriebes PG angreift, und wenn die Standgetriebeübersetzung i0 des Planetengetriebes PG "i0 = -2" beträgt, herrschen am Planetengetriebe PG1 folgende Verhältnisse der Momente M:

$$M_{VM}/M_{EM}=2$$

$$M_{PT2}/M_{EM}=3$$

$$M_{PT2}/M_{VM}=1,5$$

wobei die Vorzeichen für die Momente so definiert sind, dass ein positives Moment jeweils im Zugbetrieb auftritt und ein negatives Moment im Schubbetrieb auftritt.

Für Drehzahlen n am Planetengetriebe PG gilt folgende Beziehung:

$$n_{EM}=3 \cdot n_{PT2}-2 \cdot n_{VM}$$

wobei die Vorzeichen der Drehzahlen so definiert sind, dass positive Drehzahlen bei einer Vorwärtsfahrt in einem Vorwärtsgang bei geschlossenem Schaltelement A des Schaltpakets SV der Vorschaltgruppe GV auftreten.

Für die Low Übersetzungsstufe der Vorschaltgruppe GV gelte exemplarisch ein Übersetzungsverhältnis von 1,29 und für die High Übersetzungsstufe der Vorschaltgruppe GV gelte exemplarisch eine Übersetzung von 1,0.

Dann, wenn weder das Schaltelement A des Schaltpakets SV noch das Schaltelement B des Schaltpakets SV der Vorschaltgruppe GV geschaltet bzw. geschlossen sind, wird das vom Verbrennungsmotor VM bereitgestellte Moment $M_{VM}$ um einen Faktor 1,5 überhöht, das von der elektrischen Maschine EM bereitgestellte Moment $M_{EM}$ wird um den Faktor 3 erhöht, und die Drehzahlen sind über die obige Gleichung bestimmt.

Dann, wenn das Schaltelement A geschaltet bzw. geschlossen sind, ist das Planetengetriebe PG direkt überbrückt, wobei sich dann im sogenannten Blockumlauf alle drei Wellen des Planetengetriebes PG mit der gleichen Drehzahl n drehen. Für den Verbrennungsmotor VM wirkt dann die Low Übersetzungsstufe der Vorschaltgruppe GV, ebenso wirkt in diesem Fall die elektrische Maschine EM die Low Übersetzungsstufe der Vorschaltgruppe GV. In diesem Fall werden die vom Verbrennungsmotor VM und der elektrischen Maschine EM bereitgestellten Momente $M_{VM}$ und $M_{EM}$ durch das Planetengetriebe PG nicht überhöht.

Dann, wenn das Schaltelement B des Schaltpakets SV der Vorschaltgruppe GV geschaltet bzw. geschlossen ist, ist das Planetengetriebe PG indirekt überbrückt und befindet sich nicht im Blockumlauf, sodass an demselben eine Differenzdrehzahl zwischen den Elementen des Planetengetriebes PG vorliegt.

Für den Verbrennungsmotor VM wirkt dann die High Übersetzungsstufe der Vorschaltgruppe GV, da der Verbrennungsmotor VM unmittelbar an die Übersetzungsstufe K2 über das Schaltelement B des Schaltpakets SV angebunden ist.

Das von dem Verbrennungsmotor VM bereitgestellte Moment $M_{VM}$ wird in diesem Fall durch das Planetengetriebe PG nicht überhöht. Das von der elektrischen Maschine EM bereitgestellte Moment $M_{EM}$ wird jedoch bei geschlossenem Schaltelement B des Schaltpakets SV um den Faktor 1,87 überhöht, die elektrische Maschine EM dreht um den Faktor 1,87 schneller als der Verbrennungsmotor VM.

Bei geschlossenem Schaltelement B des Schaltpakets SV der Vorschaltgruppe GV ist der Steg PT2 des Planetengetriebes PG mit der Übersetzungsstufe K1 verbunden, sodass die Low Übersetzungsstufe von 1,29 für den Steg PT2 wirkt. Das Hohlrad PH2 ist bei geschlossenem Schaltelement B mit der Übersetzungsstufe K2 der Vorschaltgruppe GV verbunden, sodass für das Hohlrad PH2 die High Übersetzung 1,0 der Vorschaltgruppe GV wirkt. Das Sonnenrad PS2 muss die Drehzahldifferenz ausgleichen und dreht daher 1,87-fach so schnell wie das Hohlrad PH2 des Planetengetriebes PG, was sich unmittelbar aus der obigen Drehzahlgleichung ergibt.

In dem Fall, in welchem bei geschlossenem Schaltelement B des Schaltpakets SV das von der elektrischen Maschine EM bereitgestellte Moment $M_{EM}$

100Nm beträgt, beträgt das Moment des Stegs PT2 des Planetengetriebes PG 300Nm und das Moment des Hohlrads PH2 des Planetengetriebes PG 200Nm. Am Eingang des Hauptgetriebes HG wirken vom Steg PT2 des Planetengetriebes PG 387Nm (300Nm·x1,29). Davon gehen 200Nm zurück zum Hohlrad PH2, sodass am Eingang des Hauptgetriebes HG 187Nm wirksam sind. Daraus erfolgt die Überhöhung des von der elektrischen Maschine EM bereitgestellten Moments $M_{EM}$ um den Faktor 1,87.

Hieraus folgt unmittelbar, dass die Anbindung der elektrischen Maschine EM und des Planetengetriebes PG, die zusammen ein elektrodynamisches Antriebssystem bereitstellen, an der Vorschaltgruppe GV besonders vorteilhaft ist, da die als Splitgruppe ausgeführte Vorschaltgruppe GV eine relativ kleine Spreizung aufweist. Daher werden Drehzahldifferenzen und Blindleistungen minimiert. Ferner kann die elektrische Maschine EM auf einen kleineren Drehzahlbereich ausgelegt werden.

Dann, wenn mit einer Antriebsstrangkonfiguration eines Kraftfahrzeugs gemäß Fig. 1 bei von der Eingangswelle $W_{GE}$ des Gruppengetriebes CT durch Öffnen der Anfahrkupplung AK abgekoppeltem Verbrennungsmotor VM rein elektrisch gefahren werden soll, ist in der Vorschaltgruppe GV, im Hauptgetriebe HG und in der gegebenenfalls vorhandenen Nachschaltgruppe GP des Gruppengetriebes CT jeweils ein Gang eingelegt, wobei die Vorschaltgruppe GV vorzugsweise in der High Übersetzungsstufe K2 bei geschlossenem Schaltelement B und das Hauptgetriebe HG vorzugsweise im ersten Gang bei geschlossenem Schaltelement E des Schaltpaktes S2 des Hauptgetriebes HG betrieben wird. Bei gegebenenfalls vorhandener Nachschaltgruppe GP wird dann vorzugsweise eine Langsamfahrstufe betrieben. In diesem Fall ist dann die elektrische Maschine EM mit einer höheren Übersetzung als der erste Gang im Hauptgetriebe HG übersetzt, da das Planetengetriebe PG zusätzlich spreizt, wie im obigen Zahlenbeispiel um den Faktor 1,87.

Dann, wenn ein hohes elektrisches, motorisches oder generatorisches Moment benötigt wird, wird in der Vorschaltgruppe GV vorzugsweise die High Übersetzungsstufe K2 durch Schließen des Schaltelements B des Schaltpakets SV gewählt. In diesem Fall ist dann die elektrische Maschine EM höher übersetzt, im obigen Zahlenbeispiel um den Faktor 1,87. Insofern kann es demnach vorteilhaft sein, zum Anfahren in der Vorschaltgruppe GV das Schaltelement B zu schließen bzw. zu schalten, da dann bei einem kombinierten, verbrennungsmotorischen und elektromotorischen Anfahren über den Verbrennungsmotor VM und die elektrische Maschine EM über die elektrische Maschine EM ein größeres Moment beigesteuert und so die schlupfend betriebene Anfahrkupplung AK entlastet werden kann.

Soll bei dem Antriebsstrang der Fig. 1 elektrodynamisch gefahren oder angefahren werden, ist hierzu der Verbrennungsmotor VM an die Eingangswelle $W_{GE}$

des Gruppengetriebes CT angekoppelt, wozu in Fig. 1 die Anfahrkupplung AK geschlossen ist. In der Vorschaltgruppe GV ist weder das Schaltelement A noch das Schaltelement B geschaltet, sodass sich dann die Vorschaltgruppe GV in Neutral befindet. Im Hauptgetriebe HG hingegen sowie in der gegebenenfalls vorhandenen Nachschaltgruppe GP ist hingegen jeweils ein Gang geschaltet, zum Anfahren ein entsprechender Anfahrgang.

So kann zum elektrodynamischen Anfahren die elektrische Maschine EM das vom Verbrennungsmotor VM bereitgestellte Moment abstützen, sodass dann am Achsantrieb AB ein Abtriebsmoment bereitgestellt wird. Das elektrodynamische Fahren bzw. Anfahren kann durch Einlegen eines Gangs in der Vorschaltgruppe GV, also durch Schließen des Schaltelements A oder B, beendet werden.

Dann, wenn beim elektrodynamischen Anfahren, in welchem, wie oben beschrieben, der Verbrennungsmotor VM an die Eingangswelle $W_{GE}$ des Gruppengetriebes CT angekoppelt und in der Vorschaltgruppe GV kein Gang eingelegt ist, die gewünschte Fahrleistung des elektrodynamischen Anfahrens nicht bereitgestellt bzw. erbracht werden kann, weil zum Beispiel die elektrische Maschine EM nicht genügend Moment abstützen kann, weil ein elektrischer Energiespeicher zu voll oder zu leer wird, wird vom elektrodynamischen Anfahren auf ein Anfahren über die Anfahrkupplung AK gewechselt, wozu durch Absenkung der Übertragungsfähigkeit der Anfahrkupplung AK dieselbe in Schlupf gebracht wird. Anschließend wird durch Anpassung des von der elektrische Maschine EM bereitgestellten Moments und/oder durch Anpassung der Übertragungsfähigkeit der Anfahrkupplung AK die Drehzahl so verändert, dass eines der Schaltelemente A, B des Schaltpakets SV der Vorschaltgruppe GV synchronisiert wird, wobei dann in der Vorschaltgruppe GV ein Gang eingelegt wird, nämlich durch Schließen bzw. Schalten des synchronisierten Schaltelements A oder B. Nachfolgend kann dann der Anfahrvorgang konventionell über den Verbrennungsmotor VM bei schlupfender Anfahrkupplung AK gegebenenfalls mit Unterstützung durch die elektrische Maschine EM fortgesetzt werden. Über die elektrische Maschine EM kann die schlupfende Anfahrkupplung AK entlastet werden.

Ebenso ist es möglich, vom Anfahren über die Anfahrkupplung AK auf ein elektrodynamisches Anfahren zu wechseln, wobei in diesem Fall in einer Ausgangssituation, also beim Anfahren über die Anfahrkupplung AK, die Anfahrkupplung AK schlupfend betrieben wird und in der Vorschaltgruppe GV ein Gang eingelegt ist, entweder beim geschlossenen Schaltelement A oder bei geschlossenem Schaltelement B. Im Hauptgetriebe HG ist ebenfalls ein Gang eingelegt. Um nun den Übergang auf das elektrodynamische Anfahren zu gewährleisten, wird zunächst das von der elektrischen Maschine EM bereitgestellte Moment und/oder das vom Verbrennungsmotor VM bereitgestellte Moment derart beeinflusst, dass das auszulegende Schaltelement A oder B des Schaltpakets SV der Vorschaltgruppe GV lastfrei wird und sich weiterhin ein gewünschter Zugkraftverlauf am Achsantrieb AB einstellt. Dabei bleibt die Zugkraft am Achsantrieb AB erhalten. Das auszulegende Schaltelement A oder B des Schaltpakets SV der Vorschaltgruppe GV wird dann lastfrei, wenn die Momentverhältnisse vom Verbrennungsmotor VM und elektrischer Maschine EM der Standgetriebeübersetzung des Planetengetriebes PG entsprechen. Dann, wenn die elektrische Maschine EM kein ausreichend großes Moment bereitstellen kann, wird am Verbrennungsmotor VM bzw. an der Anfahrkupplung AK die Last entsprechend abgesenkt, um die Lastfreiheit des auszulegenden Schaltelements A oder B zu gewährleisten. Dann, wenn das Schaltelement A oder B lastfrei ist, wird das auszulegende Schaltelement ausgelegt, wobei nachfolgend durch Anpassung der Übertragungsfähigkeit der Anfahrkupplung AK und/oder durch Anpassung des von der elektrischen Maschine EM bereitgestellten Moments die Drehzahl so verändert wird, dass die Anfahrkupplung AK synchronisiert wird. Hierbei kommt dann die Anfahrkupplung AK automatisch ins Haften, wobei dann die Anfahrkupplung AK geschlossen wird. Anschließend kann dann der Anfahrvorgang elektrodynamisch fortgesetzt werden.

Dann, wenn der Verbrennungsmotor VM über die elektrische Maschine EM gestartet werden soll oder wenn ein Ladebetrieb zum Laden eines elektrischen Energiespeichers gewünscht ist, wird durch Schließen des Schaltelements B des Schaltpakets SV der Vorschaltgruppe GV die Vorschaltgruppe GV in der High Übersetzungsstufe K2 betrieben. Zum Starten des Verbrennungsmotors VM wird dann im obigen Beispiel ein um den Faktor 1,87 geringes Moment benötigt, als dies bei direkter Verbindung zwischen Verbrennungsmotor VM und elektrischer Maschine EM nötig wäre. Im Ladebetrieb dreht die elektrische Maschine um den Faktor 1,87 schneller als der Verbrennungsmotor VM, sodass eine höhere generatorische Leistung bereitgestellt werden kann. Zum Achsabtriebe AB hin wird vorzugsweise das Hauptgetriebe HG sowohl beim Starten des Verbrennungsmotors VM als auch im Ladebetrieb nach Neutral geschaltet, sodass entweder der Verbrennungsmotorstart oder Ladebetrieb von der Fahrgeschwindigkeit unabhängig ist. Es ist dann kein Bremseingriff an einer Betriebsbremse des Kraftfahrzeugs erforderlich.

Ferner kann in der Vorschaltgruppe GV eine Lastschaltung ausgeführt werden. In diesem Fall ist in der Ausgangssituation die Anfahrkupplung AK geschlossen, der Verbrennungsmotor VM ist demnach an die Eingangswelle $W_{GE}$ des Gruppengetriebes CT angekoppelt, wobei in der Vorschaltgruppe GV entweder durch Schalten des Schaltelements A oder durch Schalten des Schaltelements B ein Gang eingelegt ist. Ebenso ist im Hauptgetriebe HG ein Gang eingelegt. In der Vorschaltgruppe GV soll nun unter Last geschaltet werden, also ein Wechsel vom Schaltelement A auf Schaltelement B oder umgekehrt vom Schaltelement B auf Schaltelement A erfolgen.

Hierzu wird das vom Verbrennungsmotor VM bereitgestellte Moment und/oder das von der elektrischen Maschine EM bereitgestellte Moment derart beeinflusst, dass das zuvor geschlossene und auszulegende Schaltelement A oder B des Schaltpakets SV lastfrei wird, und zwar unter gleichzeitiger Bereitstellung eines gewünschten Zugkraftverlaufs am Achsantrieb AB. Bei einer Hochschaltung kann die Zugkraft auf das Niveau des Zielgangs abgesenkt werden. Das auszulegende Schaltelement A oder B wird lastfrei, wenn die Momentverhältnisse von Verbrennungsmotor VM und elektrischer Maschine EM der Standübersetzung i0 des Planetengetriebes PG entsprechen. Dann, wenn die elektrische Maschine EM nicht ausreichend Moment aufbringen kann, wird die Last am Verbrennungsmotor VM abgesenkt. In diesem Fall muss dann eine Verringerung der Zugkraft in Kauf genommen werden. Dann, wenn das auszulegende Schaltelement A oder B lastfrei ist, wird das auszulegende Schaltelement ausgelegt. Darauffolgend erfolgt eine Synchronisierung des einzulegenden Schaltelements B oder A durch Änderung bzw. Anpassung der Momente von Verbrennungsmotor VM und/oder elektrischer Maschine EM unter Beibehaltung der Zugkraft, wobei nach Synchronisierung das einzulegende Schaltelement B oder A geschlossen bzw. eingelegt wird. Die Laständerung am Verbrennungsmotor VM und der elektrischen Maschine EM erfolgt nach der gewünschten Betriebsstrategie. Alternativ kann die vorzugsweise als Splitgruppe ausgeführte Vorschaltgruppe GV auch zugkraftunterbrochen geschaltet werden, wenn die Last am Verbrennungsmotor VM vollständig abgebaut wird.

Zur Synchronisierung des Hauptgetriebes HG im Zusammenhang mit der Ausführung einer zugkraftunterbrochenen Schaltung im Hauptgetriebe HG bei an die Eingangswelle $W_{GE}$ des Gruppengetriebes CT angekoppelten Verbrennungsmotor VM und bei Vorschaltgruppe GV in Neutral wird die Synchronisierung des Hauptgetriebes HG über die elektrische Maschine EM durchgeführt, wozu der Verbrennungsmotor VM an der Getriebeeingangswelle $W_{GE}$ angekoppelt bleibt. In diesem Fall erfolgt demnach eine Synchronisation des Hauptgetriebes HG bei Vorschaltgruppe GV in Neutral. Die Synchronisation wird mithilfe einer entsprechenden Anpassung der Drehzahlen von Verbrennungsmotor VM und/oder elektrischer Maschine EM durchgeführt. Die Anfahrkupplung AK bleibt geschlossen, da sonst die Drehzahl der Eingangswelle $W_{GE}$ der Vorschaltgruppe GV und damit des Gruppengetriebes CT nicht definiert wäre.

Ebenso ist eine Synchronisation des Hauptgetriebes HG möglich, wenn in der Vorschaltgruppe GV durch Schließen des Schaltelements B oder A des Schaltpakets SV ein Gang eingelegt ist. In diesem Fall wird dann zur Synchronisation des Hauptgetriebes HG im Zusammenhang mit der Ausführung einer zugkraftunterbrochenen Schaltung des Hauptgetriebes HG über eine Drehzahlregelung der elektrischen Maschine EM die Synchronisation durchgeführt, wobei hierbei die Anfahrkupplung AK entweder geschlossen bleibt oder geöffnet werden kann. Dann, wenn die Anfahrkupplung AK geschlossen bleibt, kann das Moment des Verbrennungsmotors VM so angepasst werden, dass der Verbrennungsmotor bei der Synchronisation mitwirkt. Dann hingegen, wenn die Anfahrkupplung AK geöffnet wird, erfolgt die Synchronisation allein über die elektrische Maschine EM.

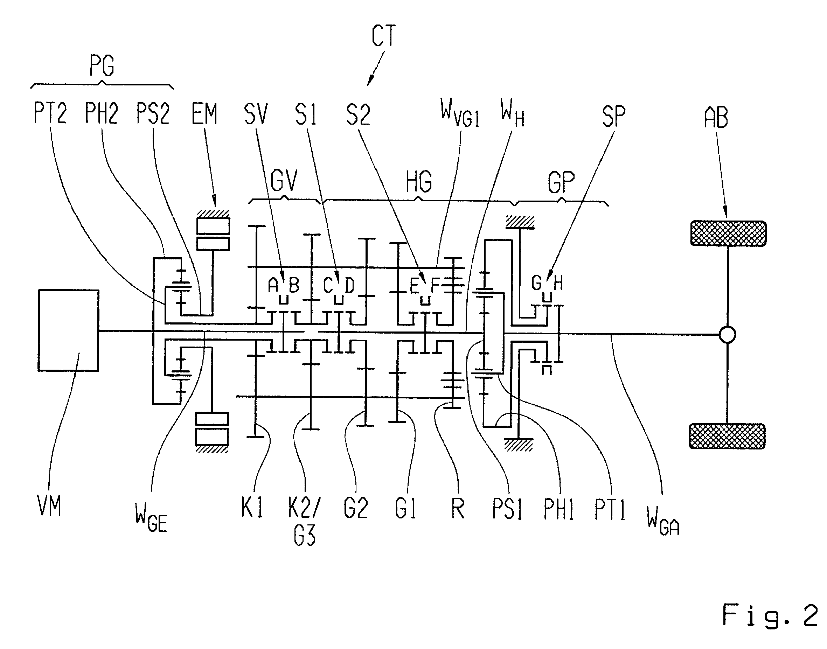

Fig. 2 zeigt einen Antriebsstrang eines Kraftfahrzeugs mit einem Gruppengetriebe CT nach einem zweiten Ausführungsbeispiel der Erfindung, wobei sich die Variante der Fig. 2 von der Variante der Fig. 1 lediglich dadurch unterscheidet, dass keine Anfahrkupplung AK vorhanden ist, in der Variante der Fig. 2 ist demnach der Verbrennungsmotor VM permanent an der Getriebeeingangswelle $W_{GE}$ angekoppelt. In diesem Fall sind die oben beschriebenen Verfahren auch durchführbar mit Ausnahme solcher Verfahren, in welcher die Anfahrkupplung AK teilweise zum schlupfenden Betrieb oder auch vollständig geöffnet werden muss.

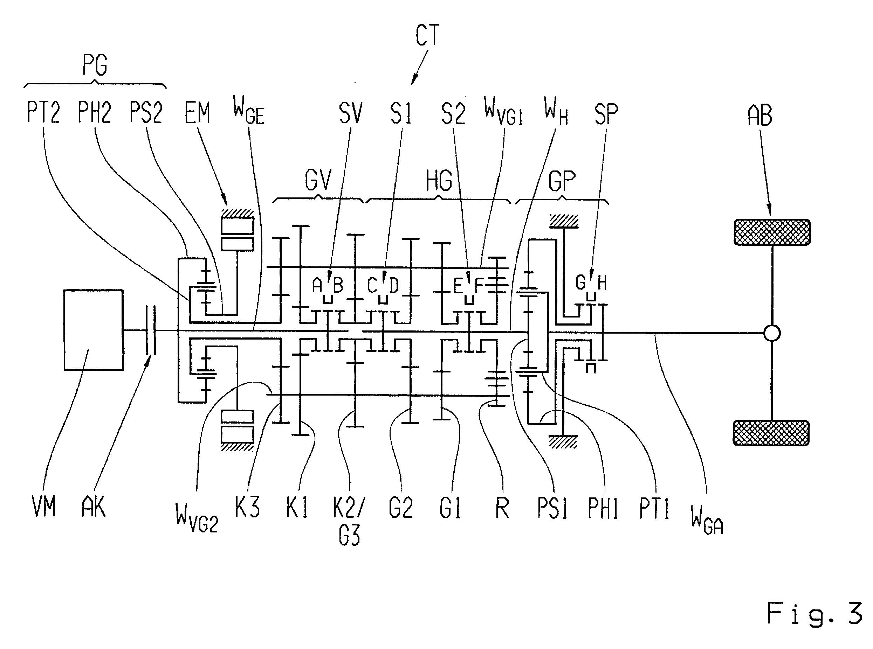

Eine weitere Variante der Erfindung zeigt Fig. 3, wobei in Fig. 3 eine zusätzliche Übersetzungsstufe K3 vorhanden ist. In der Variante der Fig. 3 ist zwischen das dritte Element des Planetengetriebes PG, also zwischen den Steg PT2 des Planetengetriebes PG, und die oder jede Vorgelegewelle $W_{VG1}$, $W_{VG2}$ die Übersetzungsstufe K3 geschaltet, deren Übersetzung zwischen der Übersetzung der schaltbaren Low Übersetzungsstufe K1 und der Übersetzung der schaltbaren High Übersetzungsstufe K2 der Vorschaltgruppe GV liegt. Hierdurch kann eine Blindleistung am Planetengetriebe PG weiter reduziert werden, und zwar sowohl dann, wenn das Schaltelement A oder das Schaltelement B des Schaltpakets SV geschlossen ist.

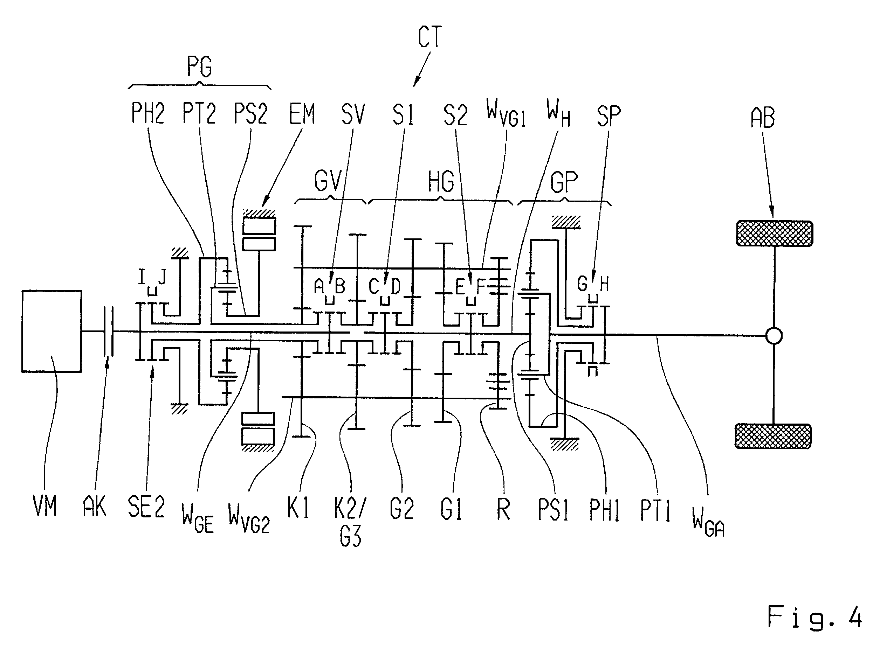

Fig. 4 bis 10 zeigen jeweils Ausführungsbeispiele des erfindungsgemäßen Gruppengetriebes CT, in welchen ein zusätzliches Schaltpaket SE1, SE2, SE3, SE1', SE2' oder SE3' vorhanden ist, welches jeweils zwei Schaltelemente I und J umfasst.

Im Ausführungsbeispiel der Fig. 4 umfasst das Gruppengetriebe CT das Schaltelement SE2, über welches die Kopplung des zweiten Elements des Planetengetriebes PG, nämlich des Hohlrads PH2 des Planetengetriebes PG, mit der Eingangswelle $W_{GE}$ des Gruppengetriebes CT und damit der Eingangswelle der Vorschaltgruppe GV schaltbar ist, wobei in der Schaltstellung I, also bei geschlossenem Schaltelement I, das zweite Element, also das Hohlrad PH2, des Planetengetriebes PG mit der Eingangswelle $W_{GE}$ des Gruppengetriebes CT und damit der Eingangswelle der Vorschaltgruppe GV gekoppelt ist, wohingegen bei geöffnetem Schaltelement I diese Kopplung aufgehoben ist.

Dann, wenn das Schaltelement I geöffnet ist, kann dasselbe entweder zur Vermeidung von Nulllastverlusten an der elektrischen Maschine EM eine Neutralposition einnehmen.

Alternativ kann in Fig. 4 jedoch auch das Schaltelement J geschlossen sein, um eine gehäusefeste Anbindung für das zweite Element des Planetengetriebes PG, nämlich das Hohlrad PH2 des Planetengetriebes PG, bereitzustellen.

Dann, wenn im Ausführungsbeispiel der Fig. 4 im Schaltpaket SE2 das Schaltelement I geschlossen ist, wird die Anordnung der Fig. 1 mit einem elektrodynamischen Antriebssystem bereitgestellt, wohingegen dann, wenn das Schaltelement J geschlossen ist, eine sogenannte ISG-Anordnung an der Vorschaltgruppe GV bereitgestellt wird. Das Planetengetriebe PG wirkt dann als Konstantübersetzung für die elektrische Maschine EM. Ein Umschalten zwischen dem Schaltelement I und dem Schaltelement J ist unter Last möglich, und zwar dann, wenn in der Vorschaltgruppe GV, nämlich im Schaltpaket SV, ein Gang eingelegt ist, also entweder das Schaltelement A oder das Schaltelement B geschaltet bzw. geschlossen ist. Durch einen Lastabbau an der elektrischen Maschine EM und eine Lastübernahme durch den Verbrennungsmotor VM kann das auszulegende Schaltelement I oder J des Schaltpakets SE2 lastfrei gemacht werden, wobei eine nachfolgende Synchronisation des einzulegenden Schaltelements J oder I über eine Drehzahlregelung der elektrischen Maschine EM erfolgt. Gegebenenfalls kann durch einen schlupfenden Betrieb der Anfahrkupplung AK der Lastabbau am auszulegenden Schaltelement des Schaltpakets SE2 erfolgen.

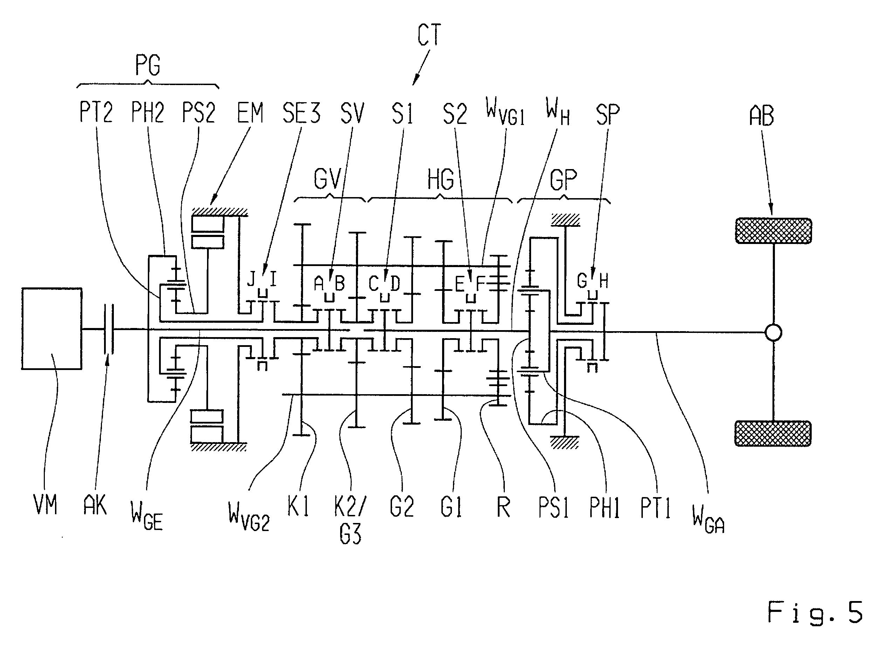

In der Variante der Fig. 5 ist ein Schaltelement SE3 vorhanden, welches die Kopplung des dritten Elements des Planetengetriebes PG, also des Stegs PT2 des Planetengetriebes PG, mit der Ausgangswelle der Vorschaltgruppe GV bzw. der Eingangswelle des Hauptgetriebes HG schaltbar gestaltet, wobei auch dieses Schaltpaket SE3 die beiden Schaltelemente I und J umfasst. Dann, wenn das Schaltelement I geschlossen ist, ist das dritte Element, also der Steg PT2, des Planetengetriebes PG mit der Ausgangswelle der Vorschaltgruppe GV gekoppelt. Dann hingegen, wenn das Schaltelement J geschlossen ist, liegt eine gehäusefeste Anbindung des dritten Elements, also des Stegs PT2 des Planetengetriebes PG, vor. Bei geschlossenem Schaltelement I liegt wiederum eine Anordnung mit elektrodynamischem Antriebssystem und bei geschlossenem Schaltelement J eine sogenannte ISG-Anordnung am Getriebeeingang vor. Das Planetengetriebe PG wirkt dann als Konstantübersetzung für die elektrische Maschine EM. Auch in der Variante der Fig. 5 kann das Schaltpaket SE3 unter Last zwischen den Schaltelementen I und J umgeschaltet werden, und zwar auf die oben für die Variante der Fig. 4 beschriebene Art und Weise.

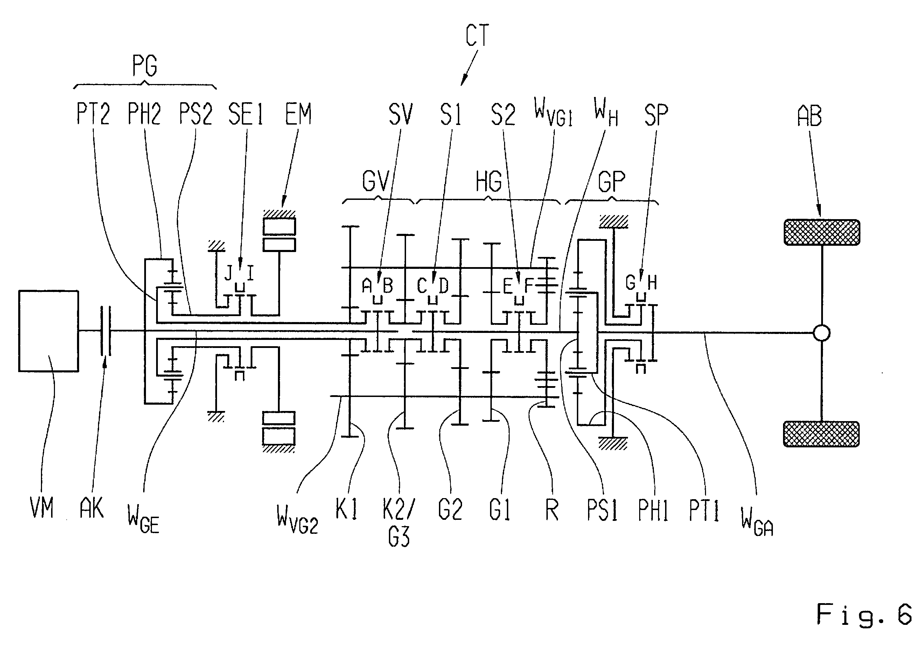

In der Variante der Fig. 6 ist ein zusätzliches Schaltpaket SE1 vorhanden, über welches die Kopplung des ersten Elements des Planetengetriebes PG, also des Sonnenrads PS2, mit der elektrische Maschine EM schaltbar ist. Das Schaltpaket SE1 verfügt wiederum über die Schaltelemente I und J, wobei bei geschlossenem Schaltelement I das Sonnenrad PS2 des Planetengetriebes PG mit der elektrischen Maschine EM gekoppelt ist, wohingegen bei geschlossenem Schaltelement J eine gehäusefeste Anbindung des Sonnenrads PS2 des Planetengetriebes PG vorliegt.

Dann, wenn das Schaltelement I geschlossen ist, liegt wiederum eine Anordnung mit einem elektrodynamischen Antriebssystem vor. Dann, wenn das Schaltelement J geschlossen ist, kann ein zusätzlicher kurzer Gang für den Verbrennungsmotor VM bereitgestellt werden.

Bei geschlossenem Schaltelement J wirkt die Übersetzung des Planetengetriebes PG zusätzlich zur Übersetzungsstufe K1 der Vorschaltgruppe GV. Dadurch verfügt dann die Vorschaltgruppe GV über drei Gänge, sodass für die Vorschaltgruppe GV ein zusätzlicher Gang vorhanden ist. Hierdurch kann bei schwerer Last vorteilhaft angefahren werden.

Auch in der Variante der Fig. 6 kann das Schaltelement SE1 unter Last geschaltet werden, jedoch nicht wie im Zusammenhang mit den Ausführungsbeispielen der Fig. 4 und 5 beschrieben, weil durch einen Lastabbau an der elektrischen Maschine EM das Schaltelement J des Schaltpakets SE1 nicht lastfrei wird. Das Schaltelement J stützt vielmehr Last des Verbrennungsmotors VM ab und kann nicht unter Differenzdrehzahl geschaltet werden. Vielmehr muss das Schaltelement J konventionell synchronisiert werden, entweder bei geöffneter Anfahrkupplung AK oder aktiv über den Verbrennungsmotor VM und die Anfahrkupplung AK. Es kann keine aktive Synchronisierung durch die elektrische Maschine EM erfolgen.

Wie bereits ausgeführt, kann in den Varianten der Fig. 4, 5 und 6 das Schaltelement J, über welches eine gehäusefeste Anbindung bereitgestellt werden kann, jeweils entfallen.

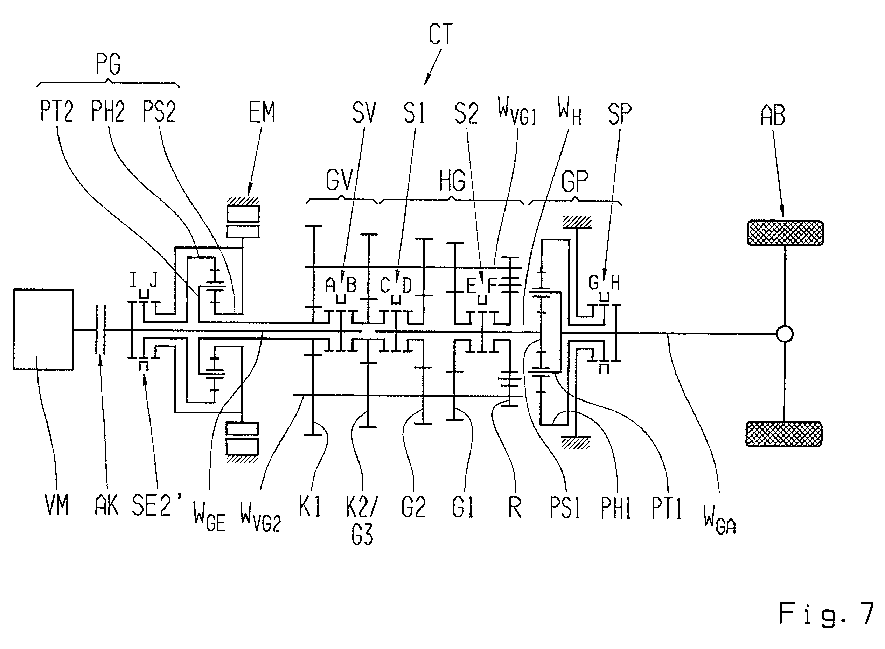

Fig. 7 zeigt eine Variante der Erfindung, in welcher ein zusätzliches Schaltpaket SE2' mit den Schaltelementen I und J vorhanden ist, wobei im Ausführungsbeispiel der Fig. 7 wiederum das zweite Element des Planetengetriebes PG, also das Hohlrad PH2 desselben, in seiner Anbindung an die Eingangswelle der Vorschaltgruppe GV und damit an die Eingangswelle $W_{GE}$ des Gruppengetriebes CT schaltbar ist. Dabei kann über das Schaltelement J das Hohlrad PH2 des Planetengetriebes PG an das Sonnenrad PS2 gekoppelt werden, sodass dann das Planetengetriebe PG im Blockumlauf betrieben und überbrückt ist. Bei geschlossenem Schaltelement I wird eine Anordnung mit einem elektrodynamischen Antriebssystem und bei geschlossenem Schaltelement J eine sogenannte ISG-Anordnung an der Vorschaltgruppe GV bereitgestellt. Das Verfahren zur Umschaltung des Schaltelements SE2' unter Last entspricht der im Zusammenhang mit der Fig. 4 für das Schaltelement SE2 beschriebenen Art und Weise.

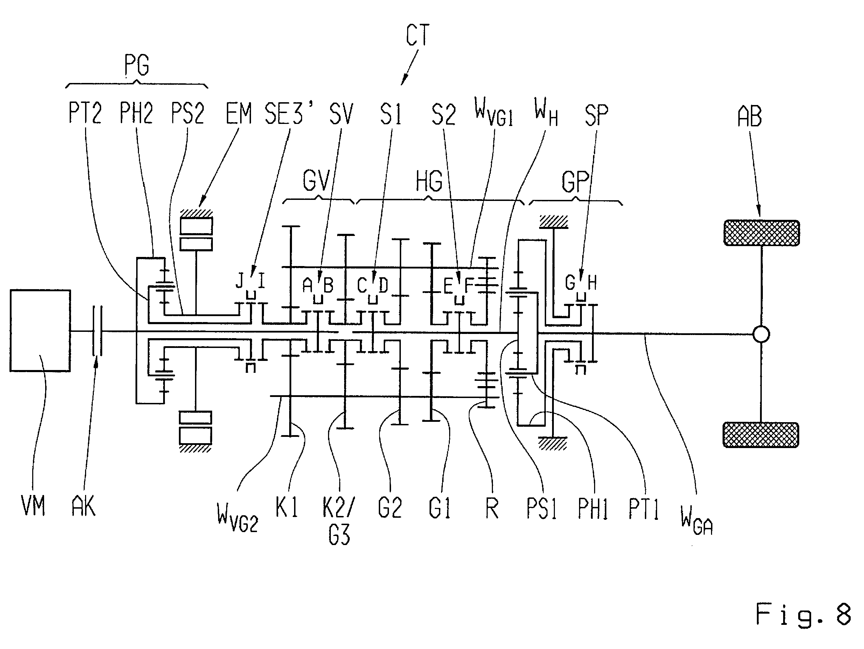

In Fig. 8 ist ein Schaltelement SE3' vorhanden, über welches die Verbindung des dritten Elements des Planetengetriebes PG, also des Stegs PT2, schaltbar ist, wobei bei geschlossenem Schaltelement I der Steg PT2 an die Ausgangswelle der Vorschaltgruppe GV gekoppelt ist und wobei bei geschlossenem Schaltelement J der Steg PT2 an das Sonnenrad PS2 des Planetengetriebes PG gekoppelt ist, sodass das Planetengetriebe PG bei geschlossenem Schaltelement J wiederum überbrückt ist und im Blockumlauf betrieben wird. Bei geschlossenem Schaltelement I liegt dann wiederum eine Anordnung mit elektrodynamischen Antriebssystem und bei geschlossenem Schaltelement J eine ISG-Anordnung am Getriebeeingang vor, wobei die Umschaltung des Schaltelements SE3' unter Last zwischen den Schaltelementen I und J auf die für das Schaltelement SE3 beschriebene Art und Weise erfolgt.

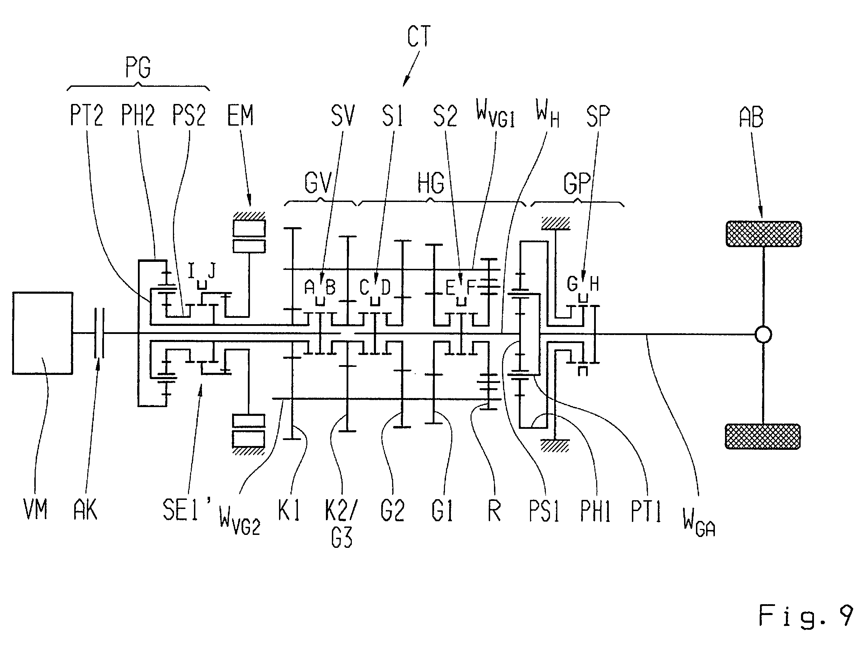

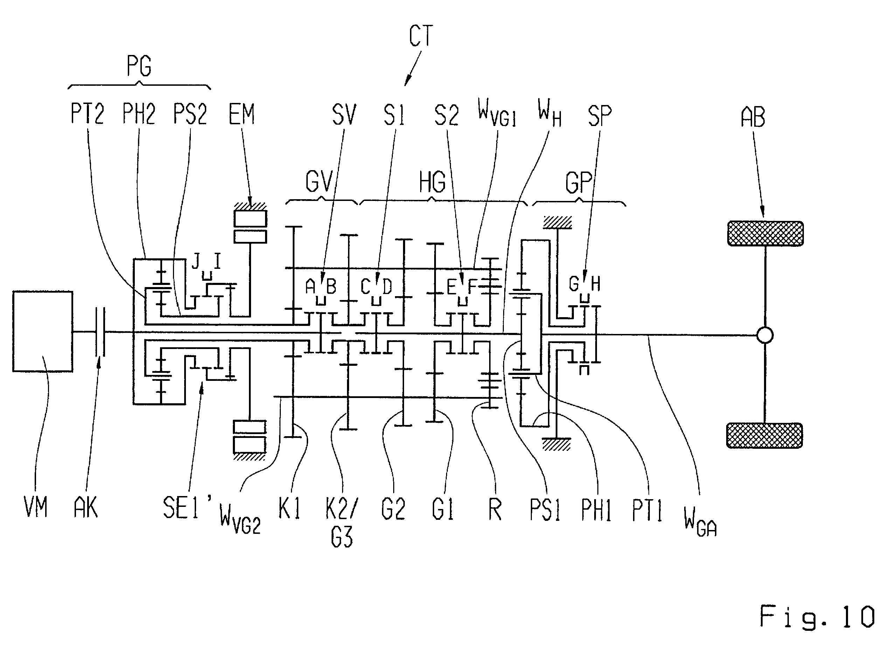

Weitere Varianten der Erfindung mit einem zusätzlichen Schaltpaket SE1' mit den Schaltelementen I und J zeigen Fig. 9 und 10. Diese Varianten sind funktionsgleich zu den Varianten der Fig. 7 und 8. In den Varianten der Fig. 9 und 10 wird jeweils die elektrische Maschine EM umschaltbar zwischen einer Welle des Planetengetriebes PG bei geschlossenem Schaltelement I und einer Welle des Gruppengetriebes CT bei geschlossenem Schaltelement J gemacht, sodass bei geschlossenem Schaltelement J das Planetengetriebe PG leer bzw. momentfrei mitläuft.

In der Variante der Fig. 9 ist demnach die Verbindung desjenigen Elements des Planetengetriebes PG, welches mit der elektrischen Maschine EM gekoppelt ist, also das Sonnenrad PS2 des Planetengetriebes PG, schaltbar. Die elektrische Maschine EM ist über das Schaltpaket SE1' zwischen dem Sonnenrad PS2 des Planetengetriebes PG und der Ausgangswelle der Vorschaltgruppe GV umschaltbar verbindbar, wobei bei geschlossenem Schaltelement J das Planetengetriebe momentfrei mitläuft. Bei geschlossenem Schaltelement I liegt eine Anordnung mit einem elektrodynamischen Antriebssystem und bei geschlossenem Schaltelement J eine ISG-Anordnung an der Vorschaltgruppe GV vor.

Dann, wenn in Fig. 9 weder das Schaltelement I noch das Schaltelement J geschlossen sind, ist die elektrische Maschine EM vollständig abkoppelbar. Zum Umschalten zwischen den Schaltelementen I und J des Schaltpakets SE1' unter Last ist vorgesehen, dass die Umschaltung nur dann erfolgt, wenn in der Vorschaltgruppe GV ein Gang eingelegt ist, also entweder das Schaltelement A oder das Schaltelement B des Schaltpakets SV der Vorschaltgruppe geschlossen ist, wobei an der elektrischen Maschine EM unter Lastübernahme durch den Verbrennungsmotor VM ein Lastabbau erfolgt. Dann, wenn die Drehzahl der Eingangswelle der Vorschaltgruppe zu gering ist, kann die Anfahrkupplung AK schlupfend betrieben werden. Durch Beeinflussung der Momente von elektrischer Maschine EM und Verbrennungsmotor VM wird das auszulegende Schaltelement des Schaltpakets SE1' lastfrei gemacht, wobei das lastfreie Schaltelement dann ausgelegt werden kann. Eine Synchronisation des einzulegenden Schaltelements erfolgt im Drehzahlregelbetrieb durch die elektrische Maschine EM, wobei nach Synchronisation des einzulegenden Schaltelements des Schaltpakets SE1' dasselbe geschaltet bzw. geschlossen wird.

In der Variante der Fig. 10 ist die Verbindung desjenigen Elements des Planetengetriebes PG, welches mit der elektrischen Maschine EM gekoppelt ist, also die Verbindung des Sonnenrads PS2 des Planetengetriebes PG, wiederum schaltbar, wobei die elektrische Maschine EM zwischen dem Sonnenrad PS2 des Planetengetriebes PG und der Eingangswelle der Vorschaltgruppe GV umschaltbar verbindbar ist.

Dann, wenn das Schaltelement I geschlossen ist, ist das Sonnenrad PS2 des Planetengetriebes PG an die elektrische Maschine EM angekoppelt. Dann hingegen, wenn das Schaltelement J geschlossen ist, ist in Fig. 10 die elektrische Maschine EM an die Eingangswelle der Vorschaltgruppe GV angekoppelt. In diesem Fall kann dann das Planetengetriebe wiederum momentfrei mitlaufen, wobei auch in diesem Fall mit geschlossenem Schaltelement I eine Anordnung mit einem elektrodynamischen Antriebssystem, bei geschlossenem Schaltelement J eine ISG-Anordnung am Getriebeeingang ohne Übersetzung für die elektrische Maschine EM durchs Planetengetriebe PG vorliegt. Dann, wenn weder das Schaltelement I noch das Schaltelement J geschlossen sind, ist auch bei der Variante der Fig. 10 die elektrische Maschine EM vollständig abkoppelbar. Die Umschaltung zwischen den Schaltelementen I, J unter Last erfolgt im Ausführungsbeispiel der Fig. 10 analog zum Ausführungsbeispiel der Fig. 9.

Bezugszeichen

| | |
|---|---|
| AB | Achsantrieb |
| AK | Anfahrkupplung |
| CT | Gruppengetriebe |
| EM | elektrische Maschine |
| G1 | Übersetzungsstufe Vorwärtsfahrt |
| G2 | Übersetzungsstufe Vorwärtsfahrt |
| G3 | Übersetzungsstufe Vorwärtsfahrt |
| GV | Vorschaltgruppe / Splitgruppe |
| GP | Nachschaltgruppe / Bereichsgruppe |
| HG | Hauptgetriebe |
| K1 | Übersetzungsstufe |
| K2 | Übersetzungsstufe |
| K3 | Übersetzungsstufe |
| PG | Planetengetriebe |
| PS1 | Sonnenrad |
| PS2 | Sonnenrad |
| PT1 | Steg |
| PT2 | Steg |
| PH1 | Hohlrad |
| PH2 | Hohlrad |
| R | Übersetzungsstufe Rückwärtsfahrt |
| S1 | Schaltpaket |
| S2 | Schaltpaket |
| SE1 | Schaltpaket |
| SE1' | Schaltpaket |
| SE2 | Schaltpaket |
| SE2' | Schaltpaket |
| SE3 | Schaltpaket |
| SE3' | Schaltpaket |
| SP | Schaltpaket |
| SV | Schaltpaket |
| VM | Verbrennungsmotor |
| $W_{GA}$ | Ausgangswelle |
| $W_{GE}$ | Eingangswelle |
| $W_H$ | Hauptwelle |
| $W_{VG1}$ | Vorgelegewelle |
| $W_{VG2}$ | Vorgelegewelle |

**Patentansprüche**

1. Automatisiertes Gruppengetriebe (CT) eines Kraftfahrzeugs, mit einem in Vorgelegebauweise ausgeführten Hauptgetriebe (HG), welches eine Hauptwelle ($W_H$) und mindestens eine Vorgelegewelle ($W_{VG1}$, $W_{VG2}$) aufweist, und mit einer dem Hauptgetriebe (HG) antriebstechnisch vorgeschalteten, insbesondere als Splitgruppe ausgeführten, Vorschaltgruppe (GV), wobei eine Eingangswelle ($W_{GE}$) des Gruppengetriebes (CT) mit einem Verbrennungsmotor (VM) eines Antriebsaggregats des Kraftfahrzeugs und eine Ausgangswelle ($W_{GA}$) des Gruppengetriebes (CT) mit einem Achsantrieb (AB) des Kraftfahrzeugs koppelbar ist wobei eine elektrische Maschine (EM) des als Hybridantrieb ausgebildeten Antriebsaggregats an die Vorschaltgruppe (GV) über ein Planetengetriebe (PG) koppelbar ist, wobei die elektrische Maschine (EM) an ein erstes Element des Planetengetriebes (PG) koppelbar ist, wobei ein zweites Element des Planetengetriebes (PG) mit einer Eingangswelle der Vorschaltgruppe (GV) und damit der Eingangswelle ($W_{GE}$) des Gruppengetriebes (CT) gekoppelt ist, **dadurch gekennzeichnet, dass** ein drittes Element des Planetengetriebes (PG) mit einer Ausgangswelle der Vorschaltgruppe (GV) und damit einer Eingangswelle des Hauptgetriebes (HG) gekoppelt ist.

2. Gruppengetriebe nach Anspruch 1, **dadurch gekennzeichnet, dass** das dritte Element des Planetengetriebes (PG) unter Umgehung eines Schaltpakets (SV) der Vorschaltgruppe (GV) über ein koaxial auf der Eingangswelle der Vorschaltgruppe (GV) gelagertes Losrad und über die oder jede Vorgelegewelle ($W_{VG1}$, $W_{VG2}$) mit dem Hauptgetriebe (HG) gekoppelt ist.

3. Gruppengetriebe nach Anspruch 2, **dadurch gekennzeichnet, dass** zwischen das dritte Element des Planetengetriebes (PG) und die oder jede Vorgelegewelle ($W_{VG1}$, $W_{VG2}$) eine Übersetzungsstufe (K3) geschaltet ist, deren Übersetzung zwischen einer Übersetzung einer schaltbaren Low Übersetzungsstufe (K1) der Vorschaltgruppe (GV) und einer Übersetzung einer schaltbaren High Übersetzungsstufe (K2) der Vorschaltgruppe (GV) liegt.

4. Gruppengetriebe nach einem der Ansprüche 1 bis 3, **dadurch gekennzeichnet, dass** die elektrische Maschine (EM) an ein Sonnenrad (PS2) des Planetengetriebes (PG) koppelbar ist, wobei die Eingangswelle der Vorschaltgruppe (GV) und damit die Eingangswelle ($W_{GE}$) des Gruppengetriebes (CT) mit einem Hohlrad (PH2) des Planetengetriebes (PG) gekoppelt ist, und wobei die Ausgangswelle der Vorschaltgruppe (GV) und damit die Eingangswelle des Hauptgetriebes (HG) mit einem Steg (PT2) des Planetengetriebes (PG) gekoppelt ist.

5. Gruppengetriebe nach einem der Ansprüche 1 bis 4, **gekennzeichnet durch** ein Schaltpaket (SE2, SE2'), über welches die Kopplung des zweiten Elements des Planetengetriebes (PG) mit der Eingangswelle ($W_{GE}$) des Gruppengetriebes (CT) schaltbar ist, wobei in einer ersten Schaltstellung (I) des Schaltpakets (SE2, SE2') das zweite Element des Planetengetriebes (PG) mit der Eingangswelle ($W_{GE}$) des Gruppengetriebes (CT) gekoppelt ist.

6. Gruppengetriebe nach einem der Ansprüche 1 bis 4, **gekennzeichnet durch** ein Schaltpaket (SE3, SE3'), über welches die Kopplung des dritten Elements des Planetengetriebes (PG) mit der Ausgangswelle der Vorschaltgruppe (GV) schaltbar ist, wobei in einer ersten Schaltstellung (I) des Schaltpakets (SE3, SE3') das dritte Element des Planetengetriebes (PG) mit der Ausgangswelle der Vorschaltgruppe (GV) gekoppelt ist.

7. Gruppengetriebe nach einem der Ansprüche 1 bis 4, **gekennzeichnet durch** ein Schaltpaket (SE1, SE1'), über welches die Kopplung des ersten Elements des Planetengetriebes (PG) mit der elektrischen Maschine (EM) schaltbar ist, wobei in einer ersten Schaltstellung (I) des Schaltpakets (SE1, SE1') das erste Element des Planetengetriebes (PG) mit der elektrischen Maschine (EM) gekoppelt ist.

8. Gruppengetriebe nach einem der Ansprüche 5 bis 7, **dadurch gekennzeichnet, dass** über das jeweilige Schaltpaket (SE1, SE2, SE3) in einer zweiten Schaltstellung (J) desselben das jeweilige Element des Planetengetriebes (PG) gehäusefest angekoppelt ist.

9. Gruppengetriebe nach Anspruch 5 oder 6, **dadurch gekennzeichnet, dass** über das jeweilige Schaltpaket (SE2', SE3') in einer zweiten Schaltstellung (J) desselben das jeweilige Element des Planetengetriebes (PG) derart an ein anderes Element des Planetengetriebes (PG) gekoppelt ist, dass das Planetengetriebe (PG) im Blockumlauf überbrückt ist.

10. Gruppengetriebe nach Anspruch 7, **dadurch gekennzeichnet, dass** über das jeweilige Schaltpaket (SE1') in einer zweiten Schaltstellung (J) desselben die elektrische Maschine (EM) derart an ein anderes Element des Planetengetriebes (PG) gekoppelt ist, dass das Planetengetriebe (PG) momentfrei mitläuft.

11. Verfahren zum Betreiben eines Kraftfahrzeugs mit einem automatisierten Gruppengetriebe (CT) nach einem der Ansprüche 1 bis 10, **dadurch gekennzeichnet, dass** für eine rein elektrische Fahrt bei von der Eingangswelle ($W_{GE}$) des Gruppengetriebes (CT) abgekoppeltem Verbrennungsmotor (VM) in der Vorschaltgruppe (GV) des Gruppengetriebes (CT) und in dem Hauptgetriebe (HG) des Gruppengetriebes (CT) und in einer gegebenenfalls vorhandenen Nachschaltgruppe (GP) des Gruppengetriebes (CT) jeweils ein Gang eingelegt wird, wobei die Vorschaltgruppe (GV) vorzugsweise in der High Übersetzungsstufe (K2) und das Hauptgetriebe (HG) vorzugsweise im ersten Gang betrieben wird.

12. Verfahren zum Betreiben eines Kraftfahrzeugs mit einem automatisierten Gruppengetriebe (CT) nach einem der Ansprüche 1 bis 10, **dadurch gekennzeichnet, dass** zum elektrodynamischen Fahren oder Anfahren bei an die Eingangswelle ($W_{GE}$) des Gruppengetriebes (CT) angekoppeltem Verbrennungsmotor (VM) die Vorschaltgruppe (GV) des Gruppengetriebes (CT) in Neutral betrieben und in dem Hauptgetriebe (HG) des Gruppengetriebes (CT) und in einer gegebenenfalls vorhandenen Nachschaltgruppe (GP) des Gruppengetriebes (CT) jeweils ein Gang eingelegt wird, sodass die elektrische Maschine (EM) zur Bereitstellung eines Abtriebsmoments ein vom Verbrennungsmotor (VM) bereitgestelltes Moment abstützt, wobei das elektrodynamische Fahren durch Einlegen eines Gangs in der Vorschaltgruppe (GV) beendet werden kann.

13. Verfahren nach Anspruch 12, **dadurch gekennzeichnet, dass** dann, wenn beim elektrodynamischen Anfahren die gewünschte Fahrleistung nicht bereitgestellt werden kann, eine zwischen die Eingangswelle ($W_{GE}$) des Gruppengetriebes (CT) und den Verbrennungsmotor (VM) geschaltete Anfahrkupplung (AK) in Schlupf gebracht wird, dass dann durch Anpassung des von der elektrischen Maschine (EM) bereitgestellten Moments und/oder durch Anpassung der Übertragungsfähigkeit der Anfahrkupplung (AK) eines der Schaltelemente (A, B) der Vorschaltgruppe (GV) synchronisiert und in der Vorschaltgruppe (GV) ein Gang eingelegt wird, um nachfolgend über den Verbrennungsmotor (VM) und die Anfahrkupplung (AK) gegebenenfalls mit Unterstützung durch die elektrische Maschine (EM) anzufahren.

14. Verfahren nach Anspruch 13, **dadurch gekennzeichnet, dass** zum Übergang vom Anfahren über den Verbrennungsmotor (VM) und die Anfahrkupplung (AK) auf das elektrodynamische Anfahren zunächst das vom Verbrennungsmotor (VM) bereitgestellte Moment und/oder das von der elektrischen Maschine (EM) bereitgestellte Moment derart beeinflusst wird, dass das auszulegende Schaltelement der Vorschaltgruppe (GV) lastfrei wird, dass anschließend das auszulegende Schaltelement der Vorschaltgruppe (GV) ausgelegt wird, dass darauffolgend durch Anpassung des von der elektrischen Maschine (EM) bereitgestellten Moments und/oder durch Anpassung der Übertragungsfähigkeit der Anfahrkupplung (AK) die Anfahrkupplung (AK) synchronisiert und geschlossen wird, um nachfolgend wieder elektrodynamisch anzufahren.

15. Verfahren zum Betreiben eines Kraftfahrzeugs mit einem automatisierten Gruppengetriebe nach einem der Ansprüche 1 bis 10, **dadurch gekennzeichnet, dass** für einen Start des Verbrennungsmotors (VM) oder für einen Ladebetrieb eines elektrischen Energiespeichers die Vorschaltgruppe (GV) des Gruppengetriebes (CT) in der High Übersetzungsstufe (K2) betrieben wird, und dass das Hautgetriebe (HG) des Gruppengetriebes (CT) vorzugsweise in Neutral betrieben wird, sodass der Start des Verbrennungsmotors (VM) oder der Ladebetrieb des elektrischen Energiespeichers unabhängig von einer Fahrgeschwindigkeit des Kraftfahrzeugs ist.

16. Verfahren zum Betreiben eines Kraftfahrzeugs mit einem automatisierten Gruppengetriebe nach einem der Ansprüche 1 bis 10, **dadurch gekennzeichnet, dass** zur Ausführung einer Lastschaltung in der Vorschaltgruppe (GV) bei an die Eingangswelle ($W_{GE}$) angekoppeltem Verbrennungsmotor (VM) und bei eingelegten Gängen in der Vorschaltgruppe (GV) und im Hautgetriebe (HG) das vom Verbrennungsmotor (VM) bereitgestellte Moment und/oder das von der elektrischen Maschine (EM) bereitgestellte Moment derart beeinflusst wird, dass das auszulegende Schaltelement der Vorschaltgruppe (GV) lastfrei wird, wobei anschließend das auszulegende Schaltelement der Vorschaltgruppe (GV) ausgelegt wird, wobei darauffolgend das einzulegende Schaltelement der Vorschaltgruppe (GV) durch Anpassung des vom Verbrennungsmotor (VM) bereitgestellten Moments und/oder des von der elektrischen Maschine (EM) bereitgestellten Moments unter Aufrechterhaltung der Zugkraft am Achsantrieb (AB) synchronisiert wird, und wobei anschließend das einzulegende Schaltelement der Vorschaltgruppe (GV) eingelegt wird.

17. Verfahren zum Betreiben eines Kraftfahrzeugs mit einem automatisierten Gruppengetriebe nach einem der Ansprüche 1 bis 10, **dadurch gekennzeichnet, dass** zur Synchronisierung des Hautgetriebes (HG) im Zusammenhang mit der Ausführung einer zugkraftunterbrochenen Schaltung im Hauptgetriebe (HG) bei an die Eingangswelle ($W_{GE}$) des Gruppengetriebes (CT) angekoppeltem Verbrennungsmotor (VM) und bei Vorschaltgruppe (GV) in Neutral die Synchronisierung des Hauptgetriebes (HG) über die elektrische Maschine (EM) durchgeführt wird, wozu der Verbrennungsmotor (VM) an der Eingangswelle ($W_{GE}$) angekoppelt bleibt.

18. Verfahren zum Betreiben eines Kraftfahrzeugs mit einem automatisierten Gruppengetriebe nach einem der Ansprüche 1 bis 10, **dadurch gekennzeichnet, dass** zur Synchronisierung des Hautgetriebes (HG) im Zusammenhang mit der Ausführung einer zugkraftunterbrochenen Schaltung im Hauptgetriebe (HG) bei an die Eingangswelle ($W_{GE}$) des Gruppengetriebes (CT) angekoppeltem Verbrennungsmotor (VM) und bei eingelegtem Gang in der Vorschaltgruppe (GV) die Synchronisierung des Hauptgetriebes (HG) über die elektrische Maschine (EM) durchgeführt wird, wozu der Verbrennungsmotor (VM) an der Eingangswelle ($W_{GE}$) angekoppelt bleibt oder von derselben abgekoppelt wird.

19. Verfahren zum Betreiben eines Kraftfahrzeugs mit einem automatisierten Gruppengetriebe nach einem der Ansprüche 5 bis 10, **dadurch gekennzeichnet, dass** zur Umschaltung des jeweiligen Schaltpakets (SE1' ,SE2, SE2', SE3, SE3') unter Last dann, wenn in der Vorschaltgruppe (GV) ein Gang eingelegt ist, an der elektrischen Maschine (EM) ein Lastabbau bei Lastübernahme durch den Verbrennungsmotor (VM) durchgeführt wird, um das auszulegende Schaltelement des jeweiligen Schaltpakets (SE1' ,SE2, SE2', SE3, SE3') lastfrei zu machen, wobei anschließend das auszulegende Schaltelement des jeweiligen Schaltpakets (SE1' ,SE2, SE2', SE3, SE3') ausgelegt wird, das einzulegende Schaltelement des jeweiligen Schaltpakets (SE1' ,SE2, SE2', SE3, SE3') über eine Drehzahlregelung der elektrischen Maschine (EM) synchronisiert und darauffolgend das einzulegende Schaltelement des jeweiligen Schaltpakets (SE1' ,SE2, SE2', SE3, SE3') eingelegt wird.

**Claims**

1. Automated group transmission (CT) of a motor vehicle, having a main transmission (HG), which is of countershaft type of construction and which has a main shaft ($W_H$) and at least one countershaft ($W_{VG1}$, $W_{VG2}$), and having a front-mounted group (GV) which is connected upstream of the main transmission (HG) in terms of drive and which is in particular in the form of a splitter group, wherein an input shaft ($W_{GE}$) of the group transmission (CT) can be coupled to an internal combustion engine (VM) of a drive assembly of the motor vehicle and an output shaft ($W_{GA}$) of the group transmission (CT) can be coupled to a final drive (AB) of the motor vehicle, wherein an electric machine (EM) of the drive assembly, which is in the form of a hybrid drive, can be coupled to the front-mounted group (GV) by way of a planetary gear set (PG), wherein the electric machine (EM) can be coupled to a first element of the planetary gear set (PG), wherein a second element of the planetary gear set (PG) is coupled to an input shaft of the front-mounted group (GV) and thus to the input shaft ($W_{GE}$) of the group transmission (CT), **characterized in that** a third element of the planetary gear set (PG) is coupled to an output shaft of the front-mounted group (GV) and thus to an input shaft of the main transmission (HG).

2. Group transmission according to Claim 1, **characterized in that** the third element of the planetary gear set (PG) is coupled to the main transmission (HG), bypassing a shift pack (SV) of the front-mounted group (GV), by way of a floating gear, which is mounted coaxially on the input shaft of the front-mounted group (GV), and by way of the or each countershaft ($W_{VG1}$, $W_{VG2}$).

3. Group transmission according to Claim 2, **characterized in that**, between the third element of the planetary gear set (PG) and the or each countershaft ($W_{VG1}$, $W_{VG2}$), there is connected a transmission ratio stage (K3) whose transmission ratio lies between a transmission ratio of a shiftable low transmission ratio stage (K1) of the front-mounted group (GV) and a transmission ratio of a shiftable high transmission ratio stage (K2) of the front-mounted group (GV).

4. Group transmission according to one of Claims 1 to 3, **characterized in that** the electric machine (EM) can be coupled to a sun gear (PS2) of the planetary gear set (PG), wherein the input shaft of the front-mounted group (GV) and thus the input shaft ($W_{GE}$) of the group transmission (CT) is coupled to an internal gear (PH2) of the planetary gear set (PG), and wherein the output shaft of the front-mounted group (GV) and thus the input shaft of the main transmission (HG) is coupled to a web (PT2) of the planetary gear set (PG).

5. Group transmission according to one of Claims 1 to 4, **characterized by** a shift pack (SE2, SE2') by way of which the coupling of the second element of the planetary gear set (PG) to the input shaft ($W_{GE}$) of the group transmission (CT) can be shifted, wherein in a first shifting position (I) of the shift pack (SE2, SE2'), the second element of the planetary gear set (PG) is coupled to the input shaft ($W_{GE}$) of the group transmission (CT).

6. Group transmission according to one of Claims 1 to 4, **characterized by** a shift pack (SE3, SE3') by way of which the coupling of the third element of the planetary gear set (PG) to the output shaft of the front-mounted group (GV) can be shifted, wherein, in a first shifting position (I) of the shift pack (SE3, SE3'), the third element of the planetary gear set (PG) is coupled to the output shaft of the front-mounted group (GV).

7. Group transmission according to one of Claims 1 to 4, **characterized by** a shift pack (SE1, SE1') by way of which the coupling of the first element of the planetary gear set (PG) to the electric machine (EM) can be shifted, wherein, in a first shifting position (I) of the shift pack (SE1, SE1'), the first element of the planetary gear set (PG) is coupled to the electric machine (EM).

8. Group transmission according to one of Claims 5 to 7, **characterized in that**, by way of the respective shift pack (SE1, SE2, SE3), in a second shifting position (J) thereof, the respective element of the planetary gear set (PG) is coupled fixedly with respect to a housing.

9. Group transmission according to Claim 5 or 6, **characterized in that**, by way of the respective shift pack (SE2', SE3'), in a second shifting position (J) thereof, the respective element of the planetary gear set (PG) is coupled to another element of the planetary gear set (PG) such that the planetary gear set (PG), rotating as a block, is bridged.

10. Group transmission according to Claim 7, **characterized in that**, by way of the respective shift pack (SE1'), in a second shifting position (J) thereof, the electric machine (EM) is coupled to another element of the planetary gear set (PG) such that the planetary gear set (PG) jointly rotates in torque-free fashion.

11. Method for operating a motor vehicle having an automated group transmission (CT) according to one of Claims 1 to 10, **characterized in that**, for purely electric travel, with internal combustion engine (VM) decoupled from the input shaft ($W_{GE}$) of the group transmission (CT), a gear is engaged in each case in the front-mounted group (GV) of the group transmission (CT) and in the main transmission (HG) of the group transmission (CT) and in a possibly provided rear-mounted group (GP) of the group transmission (CT), wherein the front-mounted group (GV) is preferably operated in the high transmission ratio stage (K2) and the main transmission (HG) is preferably operated in the first gear.

12. Method for operating a motor vehicle having an automated group transmission (CT) according to one of Claims 1 to 10, **characterized in that**, for electrodynamic travel or starting, with internal combustion engine (VM) coupled to the input shaft ($W_{GE}$) of the group transmission (CT), the front-mounted group (GV) of the group transmission (CT) is operated in neutral and a gear is engaged in each case in the main transmission (HG) of the group transmission (CT) and in a possibly provided rear-mounted group (GP) of the group transmission (CT), such that the electric machine (EM), to provide drive output torque, supports a torque provided by the internal combustion engine (VM), wherein the electrodynamic travel can be ended by engagement of a gear in the front-mounted group (GV).

13. Method according to Claim 12, **characterized in that**, if, during electrodynamic starting, the desired drive power cannot be provided, a starting clutch (AK) connected between the input shaft ($W_{GE}$) of the group transmission (CT) and the internal combustion engine (VM) is caused to slip, **in that**, then, by adaptation of the torque provided by the electric machine (EM) and/or by adaptation of the transmitting capability of the starting clutch (AK), one of the shift elements (A, B) of the front-mounted group (GV) is synchronized and a gear is engaged in the front-mounted group (GV), in order for starting to subsequently be performed by way of the internal combustion engine (VM) and the starting clutch (AK), possibly with assistance from the electric machine (EM).

14. Method according to Claim 13, **characterized in that**, for the changeover from starting by way of the internal combustion engine (VM) and the starting clutch (AK) to electrodynamic starting, it is firstly the case that the torque provided by the internal combustion engine (VM) and/or the torque provided by the electric machine (EM) is influenced such that the shift element to be disengaged of the front-mounted group (GV) is fully relieved of load, **in that**, subsequently, the shift element to be disengaged of the front-mounted group (GV) is disengaged, **in that**, subsequently, by adaptation of the torque provided by the electric machine (EM) and/or by adaptation of the transmitting capability of the starting clutch (AK), the starting clutch (AK) is synchronized and closed, in order for electrodynamic starting to subsequently be performed again.

15. Method for operating a motor vehicle having an automated group transmission according to one of Claims 1 to 10, **characterized in that**, for a start of the internal combustion engine (VM) or for charging operation of an electrical energy store, the front-mounted group (GV) of the group transmission (CT) is operated in the high transmission ratio stage (K2), and **in that** the main transmission (HG) of the group transmission (CT) is preferably operated in neutral such that the start of the internal combustion engine (VM) or the charging operation of the electrical energy store is independent of a travelling speed of the motor vehicle.

16. Method for operating a motor vehicle having an automated group transmission according to one of Claims 1 to 10, **characterized in that**, to perform a shift under load in the front-mounted group (GV), with internal combustion engine (VM) coupled to the input shaft ($W_{GE}$) and with gears engaged in the front-mounted group (GV) and in the main transmission (HG), the torque provided by the internal combustion engine (VM) and/or the torque provided by the electric machine (EM) is influenced such that the shift element to be disengaged of the front-mounted group (GV) is fully relieved of load, wherein subsequently, the shift element to be disengaged of the front-mounted group (GV) is disengaged, wherein subsequently, the shift element to be engaged of the front-mounted group (GV) is synchronized by adaptation of the torque provided by the internal combustion engine (VM) and/or of the torque provided by the electric machine (EM) while maintaining the traction force at the final drive (AB), and wherein subsequently, the shift element to be engaged of the front-mounted group (GV) is engaged.

17. Method for operating a motor vehicle having an automated group transmission according to one of Claims 1 to 10, **characterized in that**, for the synchronization of the main transmission (HG) in conjunction with the execution of a shift with interruption in traction force in the main transmission (HG), with internal combustion engine (VM) coupled to the input shaft ($W_{GE}$) of the group transmission (CT) and with front-mounted group (GV) in neutral, the synchronization of the main transmission (HG) is performed by way of the electric machine (EM), for which purpose the internal combustion engine (VM) remains coupled to the input shaft ($W_{GE}$).

18. Method for operating a motor vehicle having an automated group transmission according to one of Claims 1 to 10, **characterized in that**, for the synchronization of the main transmission (HG) in conjunction with the execution of a shift with interruption in traction force in the main transmission (HG), with internal combustion engine (VM) coupled to the input shaft ($W_{GE}$) of the group transmission (CT) and with a gear engaged in the front-mounted group (GV), the synchronization of the main transmission (HG) is performed by way of the electric machine (EM), for which purpose the internal combustion engine (VM) remains coupled to or is decoupled from the input shaft ($W_{GE}$).

19. Method for operating a motor vehicle having an automated group transmission according to one of Claims 5 to 10, **characterized in that**, for the shifting of the respective shift pack (SE1', SE2, SE2', SE3, SE3') under load when a gear is engaged in the front-mounted group (GV), a depletion of load at the electric machine (EM) with a takeover of load by the internal combustion engine (VM) is performed in order to fully relieve the shift element to be disengaged of the respective shift pack (SE1', SE2, SE2', SE3, SE3') of load, wherein subsequently, the shift element to be disengaged of the respective shift pack (SE1', SE2, SE2', SE3, SE3') is disengaged, the shift element to be engaged of the respective shift pack (SE1', SE2, SE2', SE3, SE3') is synchronized by way of rotational speed regulation of the electric machine (EM), and subsequently, the shift element to be engaged of the respective shift pack (SE1', SE2, SE2', SE3, SE3') is engaged.

**Revendications**

1. Transmission automatisée à changement de gamme (CT) pour véhicule à moteur, comportant une transmission principale (HG) du type à renvoi qui comprend un arbre principal ($W_H$) et au moins un arbre de renvoi ($W_{VG1}$, $W_{VG2}$), et comportant un groupe amont (GV) monté en amont de la transmission principale (HG) et agissant notamment dans le système d'entraînement en tant que doubleur de gamme, dans lequel un arbre d'entrée ($W_{GE}$) de la transmission à sélection de gamme (CT) peut être accouplé à un moteur à combustion interne (VM) d'un groupe motopropulseur du véhicule à moteur et un arbre de sortie ($W_{GA}$) de la transmission à sélection de gamme (CT) peut être accouplé à un entraînement d'essieu (AB) du véhicule à moteur, dans lequel une machine électrique (EM) du groupe motopropulseur, réalisé sous forme d'entraînement hybride, peut être accouplée au groupe amont (GV) par l'intermédiaire d'un train planétaire (PG), dans lequel la machine électrique (EM) peut être accouplée à un premier élément du train planétaire (PG), dans lequel un deuxième élément du train planétaire (PG) est accouplé à un arbre d'entrée du groupe amont (GV) et par conséquent, à l'arbre d'entrée ($W_{GE}$) de la transmission de sélection de gamme (CT), **caractérisé en ce qu'**un troisième élément du train planétaire (PG) est accouplé à un arbre de sortie du groupe amont (GV) et par conséquent, à un arbre d'entrée de la transmission principale (HG).

2. Transmission à sélection de gamme selon la revendication 1, **caractérisée en ce que** le troisième élément du train planétaire (PG) est accouplé à la transmission principale (HG) par l'intermédiaire d'une roue libre montée de manière coaxiale sur l'arbre d'entrée du groupe amont (GV) et par l'intermédiaire du ou de chaque arbre de renvoi ($W_{VG1}$, $W_{VG2}$) en contournant un relais de changement de vitesse (SV) du groupe amont (GV).

3. Transmission à sélection de gamme selon la revendication 2, **caractérisée en ce que**, entre le troisième élément du train planétaire (PG) et le ou chaque arbre de renvoi ($W_{VG1}$, $W_{VG2}$), est monté un étage de démultiplication (K3) dont le rapport de démultiplication se situe entre un rapport de démultiplication d'un étage de démultiplication à faible rapport commutable (K1) du groupe amont (GV) et un rapport de démultiplication d'un étage de démultiplication à rapport élevé commutable (K2) du groupe amont (GV).

4. Transmission à sélection de gamme selon l'une quelconque des revendications 1 à 3, **caractérisée en ce que** la machine électrique (EM) peut être accouplée à un pignon solaire (PS2) du train planétaire (PG), dans laquelle l'arbre d'entrée du groupe amont (GV) et par conséquent, l'arbre d'entrée ($W_{GE}$) de la transmission à sélection de gamme (CT) est accouplé à une couronne (PH2) du train planétaire (PG), et dans lequel l'arbre de sortie du groupe amont (GV) et par conséquent, l'arbre d'entrée de la transmission principale (HG) est accouplé à un porte-satellites (PT2) du train planétaire (PG).

5. Transmission à sélection de gamme selon l'une quelconque des revendications 1 à 4, **caractérisée par** un relais de changement de vitesse (SE2, SE2') par l'intermédiaire duquel l'accouplement du deuxième élément du train planétaire (PG) à l'arbre d'entrée ($W_{GE}$) de la transmission à sélection de gamme (CT) peut être activé, dans lequel, à une première position de changement de vitesse (I) du relais de changement de vitesse (SE2, SE2'), le deuxième élément du train planétaire (PG) est accouplé à l'arbre d'entrée ($W_{GE}$) de la transmission à sélection de gamme (CT).

6. Transmission à sélection de gamme selon l'une quelconque des revendications 1 à 4, **caractérisée par** un relais de changement de vitesse (SE3, SE3') par l'intermédiaire duquel l'accouplement du troisième élément du train planétaire (PG) à l'arbre de sortie du groupe amont (GV) peut être activé, dans lequel, à une première position de changement de vitesse (I) du relais de changement de vitesse (SE3, SE3'), le troisième élément du train planétaire (PG) est accouplé à l'arbre de sortie du groupe amont (GV).

7. Transmission à sélection de gamme selon l'une quelconque des revendications 1 à 4, **caractérisée par** un relais de changement de vitesse (SE1, SE1') par l'intermédiaire duquel l'accouplement du premier élément du train planétaire (PG) à la machine électrique (EM) peut être activé, dans lequel, à une première position de changement de vitesse (I) du relais de changement de vitesse (SE1, SE1'), le premier élément du train planétaire (PG) est accouplé à la machine électrique (EM).

8. Transmission à sélection de gamme selon l'une quelconque des revendications 5 à 7, **caractérisée en ce que** l'élément respectif du train planétaire (PG) est accouplé de manière solidaire par l'intermédiaire du relais de changement de vitesse respectif (SE1, SE2, SE3) à un boîtier à une deuxième position de changement de vitesse (J) de celui-ci.

9. Transmission à sélection de gamme selon la revendication 5 ou 6, **caractérisée en ce que** l'élément respectif du train planétaire (PG) est accouplé par l'intermédiaire du relais de changement de vitesse respectif (SE2', SE3'), à une deuxième position de changement de vitesse (J) de celui-ci, à un autre élément du train planétaire (PG) de telle manière que le train planétaire (PG) soit contourné lors d'un mouvement en bloc.

10. Transmission à sélection de gamme selon la revendication 7, **caractérisée en ce que** la machine électrique (EM) est accouplée par l'intermédiaire du relais de changement de vitesse respectif (SE1') à une deuxième position de changement de vitesse (J) de celui-ci à un autre élément du train planétaire (PG) de telle manière que le train planétaire (PG) se déplace simultanément sans aucun couple.

11. Procédé de mise en fonctionnement d'un véhicule à moteur comportant une transmission automatisée à sélection de gamme (CT) selon l'une quelconque des revendications 1 à 10, **caractérisé en ce que**, pour un fonctionnement uniquement électrique, lorsque le moteur à combustion interne (VM) est découplé de l'arbre d'entrée (W$_{GE}$) de la transmission à sélection de gamme (CT), un rapport respectif est engagé dans le groupe amont (GV) de la transmission à sélection de gamme (CT) et dans la transmission principale (HG) de la transmission à sélection de gamme (CT) et dans un groupe aval (GP) éventuellement présent dans la transmission à sélection de gamme (CT), dans lequel le groupe amont (GV) est de préférence commandé à la première vitesse dans l'étage de démultiplication à rapport élevé (K2) et la transmission principale (HG) est de préférence mise en fonctionnement au premier rapport.

12. Procédé de mise en fonctionnement d'un véhicule à moteur comportant une transmission automatisée à sélection de gamme (CT) selon l'une quelconque des revendications 1 à 10, **caractérisé en ce que**, pour un fonctionnement électrodynamique ou un démarrage effectué lorsque le moteur à combustion interne (VM) est accouplé de l'arbre d'entrée (W$_{GE}$) de la transmission à sélection de gamme (CT), le groupe amont (GV) de la transmission à sélection de gamme (CT) est mis en fonctionnement en position neutre et un rapport respectif est engagé dans la transmission principale (HG) de la transmission à sélection de gamme (CT) et dans un groupe aval (GP) éventuellement présent dans la transmission à sélection de gamme (CT), de manière à ce que la machine électrique (EM) renforce le couple délivré par le moteur à combustion interne (VM) pour fournir un couple de sortie, dans lequel le fonctionnement électrodynamique peut être interrompu par engagement d'un rapport dans le groupe amont (GV).

13. Procédé selon la revendication 12, **caractérisé en ce que**, si, lors d'un démarrage électrodynamique, la puissance motrice souhaitée ne peut pas être fournie, un embrayage de démarrage (AK) monté entre l'arbre d'entrée (W$_{GE}$) de la transmission à sélection de gamme (CT) et le moteur à combustion interne (VM) est amené à patiner, **en ce que** l'un des éléments de changement de rapport (A, B) du groupe amont (GV) est ensuite synchronisé par adaptation du couple délivré par la machine électrique (EM) et/ou par adaptation de la capacité de transmission de l'embrayage de démarrage (AK) et **en ce qu'**un rapport est engagé dans le groupe amont (GV) afin d'effectuer ensuite un démarrage au moyen du moteur à combustion interne (VM) et de l'embrayage de démarrage (AK), le cas échéant avec l'aide de la machine électrique (EM).

14. Procédé selon la revendication 13, **caractérisé en ce que**, pour effectuer une transition du démarrage au moyen du moteur à combustion interne (VM) et de l'embrayage de démarrage (AK) à un démarrage électrodynamique, le couple délivré par le moteur à combustion interne (VM) et/ou le couple délivré par la machine électrique (EM) est/sont tout d'abord influencé(s) de manière à ce que l'élément de changement de rapport à débrayer dans le groupe amont (GV) ne soit soumis à aucune charge, **en ce que** l'élément de changement de rapport à débrayer dans le groupe amont (GV) soit ensuite débrayé, **en ce qu'**ensuite, l'embrayage de démarrage (AK) soit synchronisé par adaptation du couple délivré par la machine électrique (EM), et/ou par adaptation de la capacité de transmission de l'embrayage de démarrage (AK) et qu'il soit décidé de rétablir ensuite un démarrage électrodynamique.

**15.** Procédé de mise en fonctionnement d'un véhicule à moteur comportant une transmission automatisée à sélection de gamme selon l'une quelconque des revendications 1 à 10, **caractérisé en ce que** pour un démarrage du moteur à combustion interne (VM) ou pour un fonctionnement en charge d'un dispositif de stockage d'énergie électrique, le groupe amont (GV) de la transmission à sélection de gamme (CT) est mis en fonctionnement dans l'étage de démultiplication à rapport élevé (K2), et **en ce que** la transmission principale (HG) de la transmission à sélection de gamme (CT) est de préférence amené à fonctionner en position neutre de manière à ce que le démarrage du moteur à combustion interne (VM) ou le fonctionnement en charge du dispositif de stockage d'énergie électrique soit indépendant d'une vitesse de déplacement du véhicule à moteur.

**16.** Procédé de mise en fonctionnement d'un véhicule à moteur comportant une transmission automatisée à sélection de gamme selon l'une quelconque des revendications 1 à 10, **caractérisé en ce que**, pour effectuer un changement de charge dans le groupe amont (GV) lorsque le moteur à combustion interne (VM) est accouplé à l'arbre d'entrée (W_GE) et lorsqu'un rapport est engagé dans le groupe amont (GV) et dans la transmission principale (HG), le couple délivré par le moteur à combustion interne (VM) et/ou le copule délivré par la machine électrique (EM) est/sont influencé(s) de manière à ce que l'élément de changement de rapport à débrayer dans le groupe amont (GV) soit dépourvu de charge, dans lequel l'élément de changement de rapport à débrayer ensuite dans le groupe amont (GV) est activé, dans lequel l'élément de changement de rapport à embrayer dans le groupe amont (GV) est ensuite synchronisé par adaptation du couple délivré par le moteur à combustion interne (VM) et/ou du couple délivré par la machine électrique (EM) par maintien de la force de traction exercée sur l'entraînement d'essieu (AB) et dans lequel l'élément de changement de rapport à embrayer dans le groupe amont (GV) est ensuite embrayé.

**17.** Procédé de mise en fonctionnement d'un véhicule à moteur comportant une transmission automatisée à sélection de gamme selon l'une quelconque des revendications 1 à 10, **caractérisé en ce que**, pour synchroniser la transmission principale (HG) en association avec l'exécution d'un changement de rapport avec interruption de la force de traction dans la transmission principale (HG) lorsque le moteur à combustion interne (VM) est accouplé à l'arbre d'entrée (W_GE) de la transmission à sélection de gramme (CT) et lorsque le groupe amont (GV) est en position neutre, la synchronisation de la transmission principale (HG) est effectuée par l'intermédiaire de la machine électrique (EM), le moteur à combustion interne (VM) étant à cet effet accouplé à l'arbre d'entrée (W_GE).

**18.** Procédé de mise en fonctionnement d'un véhicule à moteur comportant une transmission automatisée à sélection de gamme selon l'une quelconque des revendications 1 à 10, **caractérisé en ce que**, pour synchroniser la transmission principale (HG) en association avec l'exécution d'un changement de rapport avec interruption de la force de traction dans la transmission principale (HG), lorsque le moteur à combustion interne (VM) est accouplé à l'arbre d'entrée (W_GE) de la transmission à sélection de gamme (CT) et lorsqu'un rapport est engagé dans le groupe amont (GV), la synchronisation de la transmission principale (HG) est effectuée par l'intermédiaire de la machine électrique (EM), le moteur à combustion interne (VM) restant à cet effet accouplé à l'arbre d'entrée (W_GE) ou en étant découplé.

**19.** Procédé de mise en fonctionnement d'un véhicule à moteur comportant une transmission automatisée à sélection de gamme selon l'une quelconque des revendications 5 à 10, **caractérisé en ce que**, pour le changement de rapport du relais de changement de vitesse respectif (SE1', SE2, SE2', SE3, SE3') en charge, une réduction de charge lors d'une reprise de charge est effectuée par le moteur à combustion interne (VM) sur la machine électrique (EM) si un rapport est engagé dans le groupe amont (GV) afin d'interrompre la charge appliquée à l'élément de changement de rapport à débrayer dans le relais de changement de vitesse respectif (SE1', SE2, SE2', SE3, SE3'), dans lequel l'élément de changement de rapport à débrayer dans le relais de changement de vitesse respectif (SE1', SE2, SE2', SE3, SE3') est débrayé, l'élément de changement de rapport à embrayer dans le relais de changement de vitesse respectif (SE1', SE2, SE2', SE3, SE3') est synchronisé par l'intermédiaire d'une régulation de la vitesse de rotation de la machine électrique (EM) et l'élément de changement de rapport à embrayer dans le relais de changement de vitesse respectif (SE1', SE2, SE2', SE3, SE3') est ensuite embrayé.

Fig. 1

EP 2 737 230 B1

PG

PT2 PH2 PS2 EM SV S1 S2 CT $W_{VG1}$ $W_H$ SP AB

GV HG GP

A B C D E F G H

VM $W_{GE}$ K1 K2/G3 G2 G1 R PS1 PH1 PT1 $W_{GA}$

Fig. 2

EP 2 737 230 B1

PG

PT2 PH2 PS2  EM  $W_{GE}$    CT    SV  S1  S2  $W_{VG1}$  $W_H$  SP    AB

GV        HG        GP

A B  C D    E F    G H

VM  AK   $W_{VG2}$  K3  K1  K2/  G2  G1  R  PS1  PH1  PT1  $W_{GA}$
                            G3

Fig. 3

Fig. 4

EP 2 737 230 B1

Fig. 5

Fig.6

Fig. 7

Fig. 8

EP 2 737 230 B1

Fig. 9

EP 2 737 230 B1

Fig. 10

PG

PT2 PH2 PS2 EM

CT

SV S1 S2 W_VG1 W_H SP

AB

GV HG GP

J I

A B C D E F G H

VM AK SE1' W_VG2 K1 K2/ G2 G1 R PS1 PH1 PT1 W_GA
G3

EP 2 737 230 B1

**EP 2 737 230 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008000953
- DE 102007010829 A1
- DE 19934696 A1
- DE 102008043341 A1
- EP 0986713 B1